# EUROPEAN PATENT APPLICATION

(11) **EP 4 717 604 A1**
(43) Date of publication of application: **01.04.2026**
(21) Application number: 24810779.9
(22) Date of filing: 17.04.2024
(51) Int. Cl.: B64D 31/16, H02P 21/22

(54) **PROPULSION DEVICE, PROPULSION CONTROL DEVICE, AND PROPULSION CONTROL PROGRAM**

(30) Priority: 22.05.2023 JP 2023084109
(71) Applicant: DENSO CORPORATION, Kariya-city, Aichi 448-8661 (JP)
(72) Inventor: SHIMIZU, Yosuke, Kariya-city Aichi 4488661 (JP)
(74) Representative: TBK
(86) International application number: PCT/JP2024/015202
(87) International publication number: WO 2024/241771

(57) **Abstract**

A propulsion device (15) includes a motor device (60) and an inverter device (80). The motor device (60) includes a motor (61). The inverter device (80) includes an inverter control unit (81) and an inverter circuit (85). The inverter control unit (81) controls the motor (61) via the inverter circuit (85). The inverter control unit (81) adjusts a current phase of a current vector according to a state of an eVTOL (10). The inverter control unit (81) is capable of adjusting the current phase according to a command torque. The inverter control unit (81) is capable of adjusting the current phase according to an abnormal state of the eVTOL (10). The inverter control unit (81) is capable of adjusting the current phase according to a flight state of the eVTOL (10).

## Description

### CROSS REFERENCE TO RELATED APPLICATION

The present application is based on Japanese Patent Application No. 2023-084109 filed on May 22, 2023. The entire disclosures of all of the above applications are incorporated herein by reference.

### TECHNICAL FIELD

The present disclosure relates to a propulsion device, a propulsion control device, and a propulsion control program.

### BACKGROUND ART

Patent Literature 1 discloses an electric aircraft that flies by rotation of rotary blades. The electric aircraft is provided with multiple motors for rotating the rotary blades and multiple motor control systems for controlling the motors. When an abnormality occurs in a motor control system that controls a predetermined motor, the motor is controlled by another motor control system.

### PRIOR ART LITERATURE

### PATENT LITERATURE

Patent Literature 1: JP2021-118573A

### SUMMARY OF INVENTION

In Patent Literature 1, when an abnormality of the motor control system occurs, the motor is controlled by another motor control system, but efficiency of the motor is not increased even if driving stop of the motor is avoided. Therefore, there is room for improvement in energy saving of a moving object such as an electric aircraft.

It is a main object of the present disclosure to provide a propulsion device, a propulsion control device, and a propulsion control program capable of realizing energy saving.

Multiple aspects disclosed in the description adopt different technical means to achieve respective objects. Reference numerals in parentheses in the claims and the section are an example indicating a correspondence relationship with specific means described in an embodiment to be described later as one aspect, and do not limit the technical scope.

In order to achieve the above object, according to an aspect of the disclosure, a propulsion device is configured to propel a moving object. The propulsion device comprises: a motor configured to be driven to propel the moving object; a state acquisition unit configured to acquire a state of the moving object; and a phase adjustment unit configured to adjust, according to the state of the moving object acquired by the state acquisition unit, a current phase of a motor current that flows through the motor.

According to the propulsion device, the current phase of the motor current is adjusted according to the state of the moving object. In the configuration, motor torque can be adjusted by adjusting the current phase of the motor current. Therefore, the motor torque can be increased without increasing magnitude of the motor current. Since efficiency of the motor can be increased by adjusting the current phase of the motor current in this manner, energy saving of the propulsion device can be realized.

According to an aspect of the disclosure, a propulsion control device is configured to control a propulsion device. The propulsion device includes a motor configured to be driven to propel a moving object. The propulsion control device comprises: a state acquisition unit configured to acquire a state of the moving object; and a phase adjustment unit configured to adjust, according to the state of the moving object acquired by the state acquisition unit, a current phase of a motor current that flows through the motor.

According to the propulsion control device, effects similar to those of the propulsion device can be achieved.

According to an aspect of the disclosure, a propulsion control program is for controlling a propulsion device. The propulsion device includes a motor configured to be driven to propel a moving object. The propulsion control program is configured to cause at least one processing unit to: acquire a state of the moving object; and adjust, according to the acquired state of the moving object, a current phase of a motor current that flows through the motor.

According to the propulsion control device, effects similar to those of the propulsion device can be achieved.

### BRIEF DESCRIPTION OF DRAWINGS

FIG. 1 is a diagram showing a configuration of an eVTOL according to a first embodiment.
FIG. 2 is a schematic diagram showing a configuration of a propulsion device.
FIG. 3 is a block diagram showing an electrical configuration of a propulsion system.
FIG. 4 is a block diagram showing an electrical configuration of an inverter control unit.
FIG. 5 is a diagram showing a relationship of a motor torque, a current amplitude, and a current phase.
FIG. 6 is a diagram showing MTPA characteristics and iso-torque lines in a dq coordinate system.
FIG. 7 is a flowchart showing a procedure of a propulsion control process.
FIG. 8 is a flowchart showing a procedure of an abnormality determination process.
FIG. 9 is a diagram showing an example in which an MTPA point is on an inner side of a current limit line.
FIG. 10 is a diagram showing an example in which the MTPA point is on an outer side of the current limit line and a torque achievement point is on an inner side of an amplitude upper limit line.
FIG. 11 is a diagram showing an example in which the MTPA point is on the outer side of the current limit line and the torque achievement point is on an outer side of the amplitude upper limit line.
FIG. 12 is a block diagram showing an electrical configuration of an inverter control unit according to a second embodiment.
FIG. 13 is a diagram showing the MTPA characteristics and the iso-torque line in the dq coordinate system.
FIG. 14 is a flowchart showing a procedure of a propulsion control process in a third embodiment.
FIG. 15 is a flowchart showing a procedure of a flight control process.
FIG. 16 is a schematic diagram showing a configuration of a propulsion device according to a fourth embodiment.
FIG. 17 is a block diagram showing an electrical configuration of a propulsion system.
FIG. 18 is a flowchart showing a procedure of an abnormality determination process.
FIG. 19 is a schematic diagram showing a configuration of a propulsion device according to a fifth embodiment.

### DESCRIPTION OF EMBODIMENTS

Hereinafter, multiple embodiments for carrying out the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only combinations between portions that are specifically clarified as being able to be used in combination in each embodiment are possible, but also partial combinations between the embodiments whose combination is not specifically clarified are possible as long as no adverse effect is particularly generated on the combination.

### <First Embodiment>

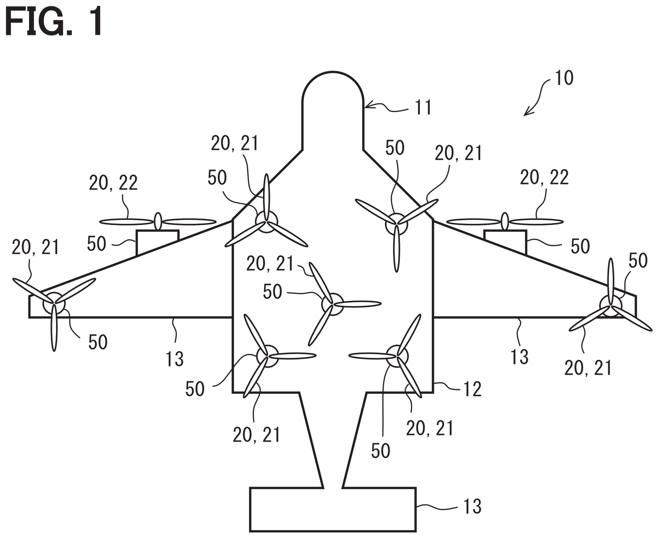

A propulsion system 30 shown in FIG. 1 is mounted on an eVTOL 10. The eVTOL 10 is an electric vertical take-off and landing aircraft. The electric vertical take-off and landing aircraft is an electric-powered vertical take-off and landing aircraft, and can take off and land vertically. The eVTOL is an abbreviation of electric vertical take-off and landing aircraft. The eVTOL 10 is an electric-powered flight vehicle that flies through the atmosphere and may be referred to as an electric flight vehicle. The eVTOL 10 is also an electric-powered aircraft and may be referred to as an electric aircraft. The eVTOL 10 is a manned flight vehicle carrying an occupant. The occupant of the eVTOL 10 includes a pilot as an operator. The propulsion system 30 is a system that is driven to propel the eVTOL 10. The propulsion system 30 may be referred to as a flight system.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has an occupant compartment for carrying occupants. Each of the wings 13 extends from the airframe main body 12, and multiple wings 13 are provided on the airframe main body 12. The wings 13 are fixed wings. The multiple wings 13 include a main wing, a tail wing, and the like.

Multiple propellers 20 are provided on the airframe 11. The eVTOL 10 is a multicopter including at least three propellers 20. For example, at least six propellers 20 are provided on the airframe 11. The propellers 20 are provided on the airframe main body 12 and the wings 13. Each of the propellers 20 rotates about a propeller axis thereof. The propeller axis is, for example, a center line of the propeller 20. The propeller 20 can generate thrust and lift in the eVTOL 10. The propeller 20 may be referred to as a rotor or a rotary blade.

In the eVTOL 10, by providing multiple propellers 20, balance of the airframe is easily maintained. Even if a propeller output of one of the propellers 20 is unintentionally reduced, the eVTOL 10 can continue to fly using the remaining propellers 20. Examples of the propeller output include a rotational speed and a torque of the propeller 20.

The propeller 20 includes blades, a boss, and a propeller shaft. The blades are arranged in a circumferential direction of the propeller axis. The boss couples the multiple blades. The propeller shaft is a rotating shaft of the propeller 20 and extends along the propeller axis from the boss.

Examples of a flight mode of the eVTOL 10 include vertical take-off, vertical landing, cruise, hovering, and the like. The flight mode may be referred to as a flight behavior. In the vertical take-off, the eVTOL 10 can take off without sliding. In the vertical take-off, the eVTOL 10 may rise in the vertical direction or may rise obliquely upward. In the vertical landing, the eVTOL 10 can land without sliding. In the vertical landing, the eVTOL 10 may descend in the vertical direction or may descend obliquely downward.

The cruise may be referred to as horizontal flight. In the cruise, the eVTOL 10 may fly in a horizontal direction without moving in an upper-lower direction, or may fly in the horizontal direction while moving in the upper-lower direction. The hovering may be referred to as hovering flight. In the hovering, the eVTOL 10 may fly as if stopping at a predetermined position in the air, or the eVTOL 10 may deviate from a predetermined position in the upper-lower direction or the horizontal direction.

The flight mode of the eVTOL 10 includes lift. In the lift, the eVTOL 10 moves in the upper-lower direction. As the lift, the eVTOL 10 may ascend obliquely upward or may descend obliquely downward. The eVTOL 10 takes off vertically when lifting upward. The eVTOL 10 lands vertically when lifting downward.

The multiple propellers 20 include lift-propellers 21 and cruise-propellers 22. Each of the lift-propellers 21 is a propeller for lifting the eVTOL 10. The lift-propellers 21 can cause the eVTOL 10 to perform vertical take-off, vertical landing, and hovering. The lift-propeller 21 may be referred to as a hovering-propeller. Each of the cruise-propellers 22 is a propeller for causing the eVTOL 10 to cruise.

The eVTOL 10 may be a tilt-rotor machine. In the tilt-rotor machine, a tilt angle of the propeller 20 is adjustable. In the tilt-rotor machine, one propeller 20 can function as both the lift-propeller and the cruise-propeller.

The eVTOL 10 includes EPUs 50. Each of the EPUs 50 is a device for driving the propeller 20 to rotate, and corresponds to a drive device. The EPU is an abbreviation of electric propulsion unit. The EPU 50 may be referred to as a power drive device or a power drive system. The EPU 50 is provided individually for each of the multiple propellers 20. The EPU 50 is aligned with the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween.

The eVTOL 10 includes propulsion devices 15. Each of the propulsion devices 15 includes the propeller 20 and the EPU 50. The propulsion device 15 is a device for propelling the eVTOL 10. The propulsion device 15 rotates the propeller 20 to cause the eVTOL 10 to fly. The eVTOL 10 is also a moving object that moves using the propulsion devices 15. Multiple propulsion devices 15 are provided on the eVTOL 10. One propulsion device 15 includes one propeller 20 and one EPU 50 for driving the propeller 20. In the propeller 20 and the EPU 50, the EPU 50 alone may be referred to as the propulsion device 15.

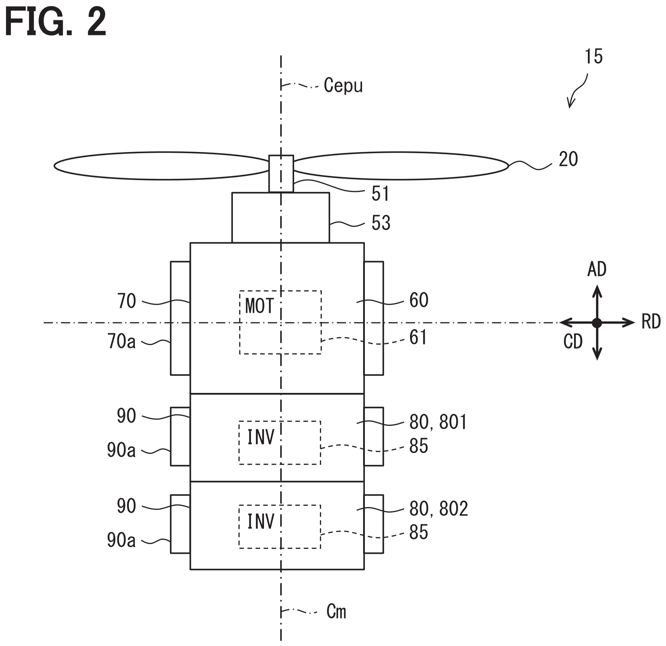

As shown in FIG. 2, the EPU 50 includes a motor device 60 and inverter devices 80. The motor device 60 includes a motor 61 and a motor housing 70. The motor housing 70 is a case and accommodates the motor 61. The motor 61 is a multi-phase AC motor. The motor 61 is a rotary electric machine of a multi-phase AC type. The motor 61 is a flight driving source of the eVTOL 10 and functions as an electric motor. The motor 61 drives and rotates the propeller 20 to enable the eVTOL 10 to fly. The motor 61 is a flight-motor causing the eVTOL 10 to fly. The EPU 50 drives the propeller 20 to rotate by driving the motor 61. As the motor 61, for example, a brushless motor is used.

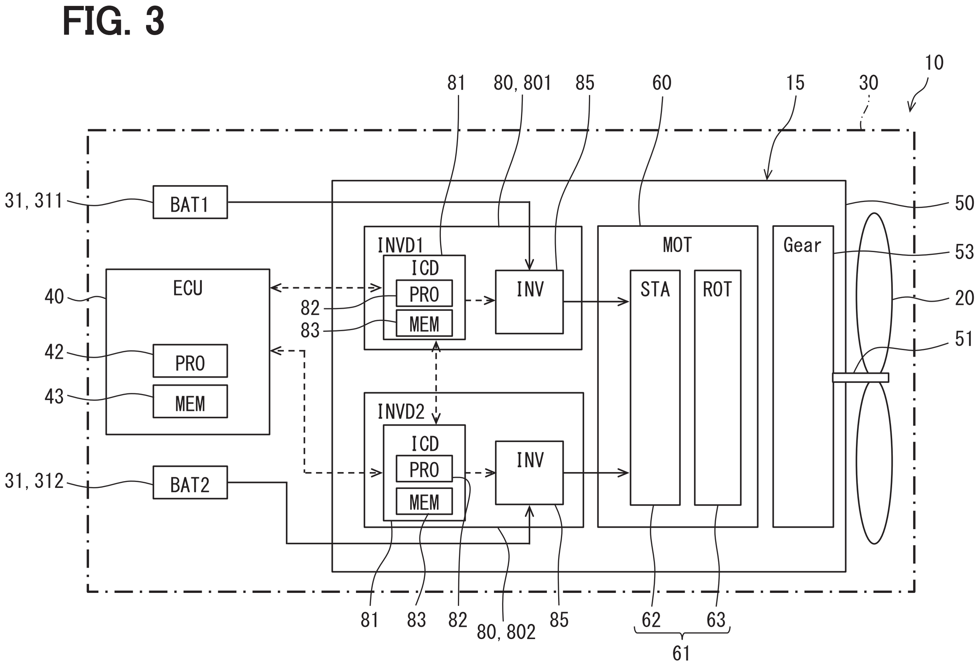

As shown in FIG. 3, the motor 61 includes a motor stator 62 and a motor rotor 63. The motor 61 includes the motor stator 62. The motor stator 62 is a stator and is fixed to the motor housing 70. The motor rotor 63 is rotated relative to the motor stator 62. The motor 61 is, for example, an axial gap-type motor. In the motor 61, the motor stator 62 and the motor rotor 63 are arranged along an axial direction AD.

The motor 61 is driven when electric power is supplied to the motor stator 62. The motor stator 62 includes motor coils which are not shown. The motor coils are coils of multiple phases. The motor coils form an armature. When the electric power is supplied to the motor stator 62, a current flows through the motor coils, and thus the motor rotor 63 is rotated. The motor rotor 63 includes magnets which are not shown. Each of the magnets is a permanent magnet that generates a field.

In the present embodiment, the magnets are embedded on an inner side of the rotor. For example, the motor 61 is an IPM motor. The IPM is an abbreviation of interior permanent magnet. The magnets may be provided on a surface of the rotor. For example, the motor 61 may be an SPM motor. The SPM is an abbreviation of surface permanent magnet.

In FIG. 2, the axial direction AD is a direction in which a motor axis Cm extends. The motor axis Cm is a rotation axis of the motor rotor 63. The motor rotor 63 rotates about the motor axis Cm. The motor axis Cm is a center line of the motor rotor 63. The motor axis Cm may be referred to as the rotation axis. Regarding the motor axis Cm, the axial direction AD, a circumferential direction CD, and a radial direction RD are orthogonal to one another. An outer side in the radial direction RD may be referred to as a radially outer side or an outer peripheral side. An inner side in the radial direction RD may be referred to as a radially inner side or an inner peripheral side.

The motor 61 includes a motor shaft which is not shown. The motor shaft rotates together with the motor rotor 63. The motor shaft supports the motor rotor 63. The motor shaft extends in the axial direction AD along the motor axis Cm.

The motor device 60 is a device of an air-cooling type. The motor device 60 includes motor fins 70a. The motor fins 70a release heat from the motor device 60 to external air. The motor fins 70a are heat dissipation fins and are included in the motor housing 70. The motor fins 70a are provided on an outer surface of the motor housing 70. For example, each of the motor fins 70a extends from an outer peripheral surface of the motor housing 70 toward the radially outer side. The motor fins 70a each extend in a plate shape orthogonal to the circumferential direction CD, and are arranged in the circumferential direction CD.

Each of the inverter devices 80 supplies electric power to the motor device 60 to drive the motor device 60. The inverter device 80 is a driving unit for driving the motor 61, and corresponds to a motor driving unit. The inverter device 80 includes an inverter circuit 85 and an inverter housing 90. The inverter housing 90 is a case and accommodates the inverter circuit 85. The inverter circuit 85 converts the electric power to be supplied to the motor 61. The inverter circuit 85 may be referred to as an inverter, a power conversion unit, or a control circuit. The inverter circuit 85 performs power conversion for each of the multiple phases. The motor 61 is driven in response to a voltage or a current supplied from the inverter circuit 85.

The inverter device 80 is a device of an air-cooling type. The inverter device 80 includes inverter fins 90a. The inverter fins 90a release heat from the inverter device 80 to the external air. The inverter fins 90a are heat dissipation fins and are included in the inverter housing 90. The inverter fins 90a are provided on an outer surface of the inverter housing 90. For example, the inverter fins 90a extend from an outer peripheral surface of the inverter housing 90 toward the radially outer side. The inverter fins 90a each extend in a plate shape in a direction orthogonal to the circumferential direction CD, and are arranged in the circumferential direction CD.

As shown in FIGS. 2 and 3, the EPU 50 includes an EPU shaft 51 and a gear 53. The EPU shaft 51 connects the motor 61 and the propeller 20 via the gear 53. The EPU shaft 51 rotates about an EPU axis Cepu. The EPU axis Cepu is a center line of the EPU shaft 51. The EPU axis Cepu extends in the axial direction AD. The EPU shaft 51 rotates together with the motor rotor 63.

The gear 53 mechanically connects the motor 61 and the propeller 20. The gear 53 is provided between the motor device 60 and the propeller 20 in the axial direction AD. The gear 53 transmits the rotation of the motor rotor 63 to the propeller 20 via the EPU shaft 51 and the like. The gear 53 includes a speed reducer.

The propulsion device 15 is a device of an air-cooling type. The propulsion device 15 can be cooled by air by the motor fins 70a and the inverter fins 90a. In the propulsion device 15, heat dissipation fins such as the motor fins 70a may be provided on the gear 53. In the propulsion device 15, a gas such as the external air may flow into the propulsion device 15. For example, the gas may pass through an interior of the motor housing 70 or an interior of the inverter housing 90. In the propulsion device 15 of the air-cooling type, at least a part of the propulsion device 15 may be cooled by gas.

As shown in FIG. 3, the eVTOL 10 includes batteries 31. Each of the batteries 31 supplies electric power to the EPU 50. For example, the battery 31 supplies the electric power to the motor device 60 via the inverter device 80. The battery 31 is electrically connected to the motor 61 via the inverter circuit 85. The batteries 31 include a rechargeable secondary battery. Examples of the secondary battery include a lithium-ion battery and a nickel-hydrogen battery. The battery 31 is a power storage device capable of storing electric power. The battery 31 may be referred to as a power supply unit. As the power supply unit, a fuel cell, a generator, or the like may be used in addition to or instead of the battery 31.

As shown in FIG. 3, the inverter device 80 includes an inverter control unit 81. The inverter control unit 81 performs a motor control via the inverter circuit 85. The motor control is a control for driving the motor 61. The inverter control unit 81 performs a propulsion control. The propulsion control is a control for driving the propulsion device 15. The propulsion control includes the motor control. The inverter control unit 81 corresponds to a propulsion control device. The propulsion control is also a control for controlling the EPU 50, and may be referred to as an EPU control.

The inverter control unit 81 is, for example, an ECU. The ECU is an abbreviation of electronic control unit. The inverter control unit 81 is mainly implemented by a computer. The computer includes a processor 82, a memory 83, an input/output interface, and a bus connecting these components. The inverter control unit 81 executes various processes for performing the propulsion control and the like by causing the processor 82 to execute a control program stored in the memory 83.

The processor 82 is hardware for performing an arithmetic process coupled to the memory 83. The processor 82 executes various processes such as a flight control process by accessing the memory 83. The memory 83 is a storage medium that stores a control program and the like. For example, the memory 83 is a non-transitory tangible storage medium that non-temporarily stores computer-readable programs and data. The non-transitory tangible storage medium is a non-transitory tangible storage medium, and is implemented by a semiconductor memory, a magnetic disk, or the like.

The memory 83 stores a control program for performing the propulsion control and the like. The control program for the processor 82 to control the propulsion device 15 corresponds to a propulsion control program. The programs stored in the memory 83 include computer readable instructions for causing the processor 82 to execute various functions. The processor 82 is a processing unit that executes predetermined processing by executing instructions in the programs stored in the memory 83.

The eVTOL 10 includes an integrated ECU 40. The integrated ECU 40 is communicably connected to the inverter control unit 81. The integrated ECU 40 and the inverter control unit 81 may wirelessly communicate with each other. The integrated ECU 40 performs an integrated control for driving the multiple propulsion devices 15 integrally. In the integrated control, the propulsion control performed by each of the multiple inverter control units 81 is integrated.

The integrated ECU 40 is mainly implemented by a computer. The computer includes a processor 42, a memory 43, an input/output interface, and a bus connecting these components. The integrated ECU 40 executes various processes such as the flight control process for performing a flight control by causing the processor 42 to execute the control program stored in the memory 43.

The processor 42 is hardware for performing an arithmetic process coupled to the memory 43. The processor 42 executes various processes such as the flight control process by accessing the memory 43. The memory 43 is a storage medium that stores a control program and the like. For example, the memory 43 is a non-transitory tangible storage medium that non-temporarily stores computer-readable programs and data. The memory 43 stores a control program for performing integrated control and the like.

The integrated ECU 40 outputs information necessary for the propulsion control to the inverter control unit 81. The integrated ECU 40 is a host ECU for the inverter control unit 81. The integrated ECU 40 individually controls the multiple propulsion devices 15 according to the flight mode or the like of the eVTOL 10. The integrated ECU 40 is capable of individually adjusting, for each of the propulsion devices 15, an output of the propulsion device 15. For example, the integrated ECU 40 calculates, for each of the multiple propulsion devices 15, a required output required by one propulsion device 15. Then, the integrated ECU 40 outputs the required output to the propulsion device 15. Examples of the required output for the propulsion device 15 include a torque required by the propulsion device 15. This torque is a torque necessary for rotating the propeller 20. The torque for one propulsion device 15 is included in a command signal output by the integrated ECU 40. As the required output, the torque, a current, a voltage, a propeller rotation speed, or the like may be used.

The inverter control unit 81 controls the motor 61 according to the required output from the integrated ECU 40. For example, the inverter control unit 81 adjusts a motor output according to the required output for one propulsion device 15. The motor output is, for example, an output torque of the motor 61. The output torque is a motor torque to be output by the motor 61. The motor torque is a torque for rotating the motor rotor 63. The inverter control unit 81 controls the motor torque. As the motor output, the torque, the current, the voltage, the motor rotation speed, or the like may be used.

The inverter control unit 81 performs the motor control using the command signal from the integrated ECU 40, detection signals from various sensors, and the like. The various sensors are communicably connected to the inverter control unit 81. Examples of the various sensors include a motor sensor, a battery sensor, and an inverter sensor. Examples of the motor sensor include a temperature sensor that detects a temperature of the motor device 60 or the motor 61, and a rotation sensor that detects the rotation speed and a rotation angle of the motor 61. Examples of the motor sensor include a current sensor that detects a current of the motor 61 and a voltage sensor that detects a voltage of the motor 61.

Examples of the battery sensor include a temperature sensor that detects a temperature of the battery 31 and a state-of-charge sensor that detects a state of charge of the battery 31. The state of charge of the battery 31 is a remaining amount of electric power stored in the battery 31. Examples of the inverter sensor include a temperature sensor that detects a temperature of the inverter device 80 and a voltage sensor that detects a voltage applied to the inverter circuit 85. The applied voltage is a voltage applied from the battery 31 to the inverter circuit 85, and is also a voltage of electric power supplied to the inverter circuit 85.

As shown in FIG. 2, the EPU 50 includes only one motor device 60 and multiple inverter devices 80. The EPU 50 includes a first inverter device 801 and a second inverter device 802 as the inverter devices 80. The first inverter device 801 and the second inverter device 802 are aligned in the axial direction AD. The inverter devices 801, 802 are aligned with the motor device 60 along the motor axis Cm. The inverter devices 801, 802 are provided on a side opposite to the propeller 20 with the motor device 60 interposed therebetween in the axial direction AD. The inverter devices 801, 802 correspond to the motor driving unit.

As shown in FIG. 3, the inverter control unit 81 of the first inverter device 801 and the inverter control unit 81 of the second inverter device 802 are communicably connected by electric wiring or the like. These inverter control units 81 can perform both direct communication without using the integrated ECU 40 and indirect communication using the integrated ECU 40.

The inverter devices 801, 802 are supplied with electric power from the respective batteries 31. The eVTOL 10 includes a first battery 311 and a second battery 312 as the batteries 31. The first battery 311 is electrically connected to the motor 61 via the inverter circuit 85 of the first inverter device 801. The first inverter device 801 drives the motor 61 using electric power of the first battery 311. The second battery 312 is electrically connected to the motor 61 via the inverter circuit 85 of the second inverter device 802. The second inverter device 802 drives the motor 61 using electric power of the second battery 312.

In EPU 50, both of the inverter devices 801, 802 control the motor 61. In each of the inverter devices 801, 802, the inverter circuit 85 supplies electric power to the motor stator 62. In each of the inverter devices 801, 802, the inverter control unit 81 performs the motor control. The motor 61 is a motor of 2 × n phases. n is a natural number. One of the inverter devices 801, 802 drives n phases of the motor, and the other drives the remaining n phases of the motor. For example, the motor 61 includes coils of 2 × n phases as the motor coils. The inverter circuit 85 in one of the inverter devices 801, 802 supplies electric power to coils of n phases, and the inverter circuit 85 in the other supplies electric power to coils of the remaining n phases.

In each of the inverter devices 801, 802, the inverter control unit 81 controls the motor output. The inverter control units 81 control the respective inverter circuits 85 such that the electric power supplied to the motor 61 is shared by the inverter devices 801, 802. For example, the inverter control units 81 perform the motor control such that the motor torque generated by the electric power from the first inverter device 801 and the motor torque generated by the electric power from the second inverter device 802 are the same.

In FIGS. 2 and 3, the motor 61 is illustrated as MOT, the inverter circuit 85 is illustrated as INV, and the integrated ECU 40 is illustrated. In FIG. 3, the first inverter device 801 is illustrated as INVD1, the second inverter device 802 is illustrated as INVD2, the first battery 311 is illustrated as BAT1, and the second battery 312 is illustrated as BAT2. The inverter control unit 81 is illustrated as ICD, the processor 82 is illustrated as PRO, the memory 83 is illustrated as MEM, the integrated ECU 40 is illustrated as ECU, the processor 42 is illustrated as PRO, and the memory 43 is illustrated as MEM. The motor stator 62 is illustrated as STA, the motor rotor 63 is illustrated as ROT, and the gear 53 is illustrated as Gear.

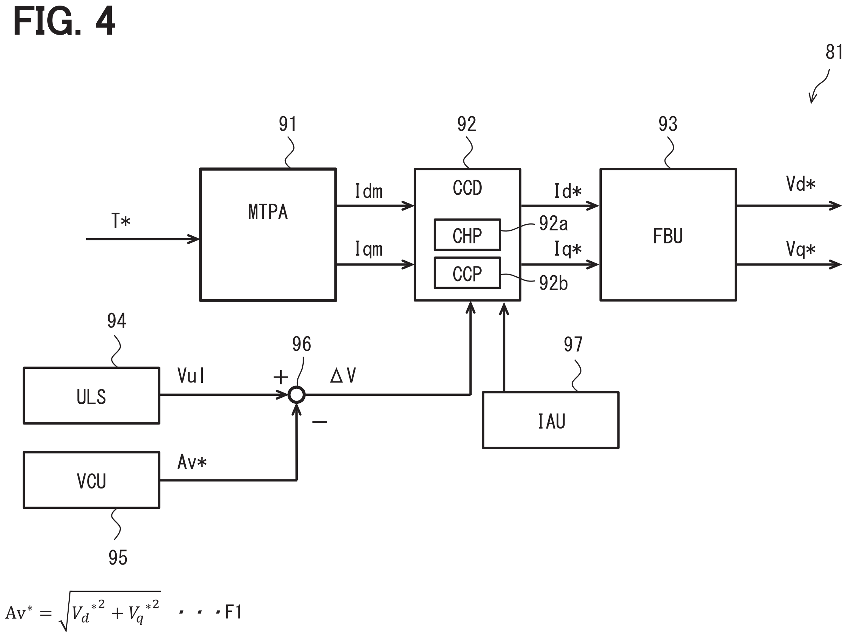

The inverter control unit 81 performs vector control as the motor control. The inverter control unit 81 controls a current vector i in a dq coordinate system as the vector control. In FIG. 4, the inverter control unit 81 controls the current vector i using a d-axis current Id and a q-axis current Iq. The current vector i is a current flowing through the motor 61 and corresponds to a motor current. The d-axis current Id is a current component that generates a magnetic flux in the motor rotor 63. The q-axis current Iq is a current component that generates the torque of the motor 61. In the dq coordinate system, a d-axis component of the current vector i is the d-axis current Id. A q-axis component of the current vector i is the q-axis current Iq.

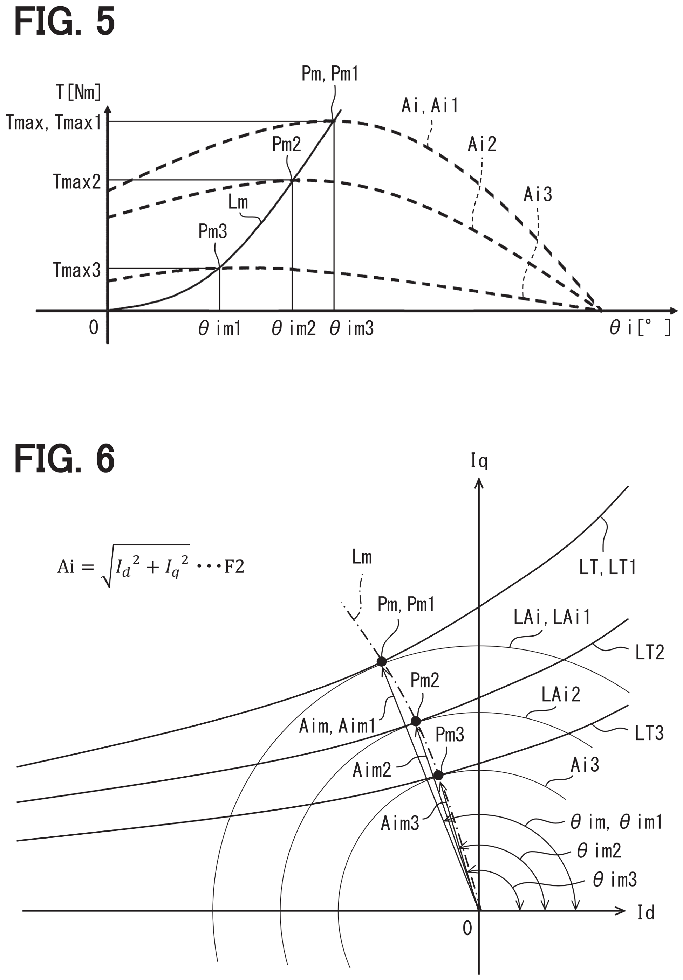

The inverter control unit 81 controls a current amplitude Ai and a current phase if1i by controlling the current vector i. The current amplitude Ai is an amplitude of the current vector i. The current amplitude Ai indicates magnitude of the current vector i. The current amplitude Ai is calculated using the d-axis current Id and the q-axis current Iq. For example, the current amplitude Ai is calculated using Formula F2 shown in FIG. 6. The current vector i has a current phase θi.

The current phase θi is a phase of the current vector i. The current phase θi is a relative phase of the current vector i relative to the motor rotor 63. The current phase θi is a phase of the current vector i relative to a magnetic pole of the motor rotor 63. For example, the current phase θi is a phase difference between the magnetic pole of the motor rotor 63 and the current vector i. The magnetic pole of the motor rotor 63 is a magnetic pole of the magnet. The current phase θi is a phase of the current vector i with reference to a magnetic pole position of the motor rotor 63. The magnetic pole position of the motor rotor 63 changes according to the rotation angle of the motor rotor 63 or the motor 61.

The d-axis current Id is a value calculated by multiplying the current amplitude Ai by cosθi. For example, the d-axis current Id is a value obtained by multiplying the current amplitude Ai by cosθi and further by a coefficient K. The q-axis current Iq is a value calculated by multiplying the current amplitude Ai by sinθi. For example, the q-axis current Iq is a value obtained by multiplying the current amplitude Ai by sinθi and further by the coefficient K. The coefficient K is any constant.

The inverter control unit 81 performs an MTPA control as the motor control. In the MTPA control, the inverter control unit 81 controls the current vector i such that the motor torque T is maximized with respect to the predetermined current amplitude Ai. In other words, in the MTPA control, the inverter control unit 81 controls the current vector i such that the current amplitude Ai is minimized with respect to the predetermined motor torque T. The MTPA is an abbreviation of maximum torque per ampere. The inverter control unit 81 performs the MTPA control by controlling the d-axis current Id and the q-axis current Iq. The inverter control unit 81 controls the current amplitude Ai and the current phase θi by controlling the d-axis current Id and the q-axis current Iq.

As shown in FIG. 5, when the current amplitude Ai is constant at a predetermined amplitude, the motor torque T increases or decreases according to a change in the current phase θi. In this case, the motor torque T is maximum at an MTPA point Pm at a predetermined current amplitude Ai. The MTPA point Pm is a point at which the motor torque T is a maximum torque Tmax. The current phase θi at the MTPA point Pm is an MTPA current phase θim. The MTPA current phase θim is a current phase θi at which the motor torque T is the maximum torque Tmax at the predetermined current amplitude Ai. For example, at MTPA points Pm1, Pm2, and Pm3 of the current amplitudes Ai1, Ai2, and Ai3, the motor torque T is maximum torques Tmax1, Tmax2, and Tmax3. At the MTPA points Pm1, Pm2, and Pm3, the current phase θi is MTPA current phases θim1, θim2, and θim3.

An MTPA line Lm showing an MTPA characteristic extends through the maximum torque Tmax of each current amplitude Ai. The MTPA line Lm indicates a relationship between the current amplitude Ai and the maximum torque Tmax. The MTPA line Lm indicates a relationship between the maximum torque Tmax and the MTPA current phase θim for a predetermined current amplitude Ai. The maximum torque Tmax increases as the current amplitude Ai at the MTPA point Pm increases. The maximum torque Tmax increases as the current phase θi at the MTPA point Pm increases. In FIG. 5, the current amplitude Ai1 is largest and the current amplitude Ai3 is smallest.

The MTPA line Lm shown in FIG. 6 indicates the MTPA characteristic in the dq coordinate system. The MTPA line Lm is a line indicating a combination of a d-axis MTPA current Idm and a q-axis MTPA current Iqm at the MTPA point Pm. The MTPA point Pm is a point indicating the current vector i under the MTPA control in the dq coordinate system. The d-axis MTPA current Idm is the d-axis current Id at the MTPA point Pm. The q-axis MTPA current Iqm is the q-axis current Iq at the MTPA point Pm.

The MTPA line Lm is a line indicating a combination of the MTPA current amplitude Aim and the MTPA current phase θim at a predetermined MTPA point Pm. The MTPA current amplitude Aim is the current amplitude Ai at the MTPA point Pm. The MTPA line Lm extends while bending from an intersection point of the d-axis and the q-axis such that the MTPA current phase θim increases as the MTPA current amplitude Aim increases. For example, at the MTPA points Pm1, Pm2, and Pm3, the MTPA current amplitude Aim1 and the MTPA current phase θim1 are largest, and the MTPA current amplitude Aim3 and the MTPA current phase θim3 are smallest.

In the MTPA characteristic, both the MTPA current amplitude Aim and the MTPA current phase θim change according to the motor torque T. In the MTPA characteristic of the present embodiment, both the d-axis MTPA current Idm and the q-axis MTPA current Iqm change according to the motor torque T. For example, in the MTPA line Lm of the present embodiment, the increase or decrease in the q-axis MTPA current Iqm accompanying the change in the motor torque T is larger than the increase or decrease in the d-axis MTPA current Idm accompanying the change in the motor torque T.

In the dq coordinate system, an iso-torque line LT of the motor torque T or the like extends to intersect the MTPA line Lm. The iso-torque line LT is a line indicating a combination of the d-axis current Id and the q-axis current Iq for a predetermined motor torque T. The MTPA point Pm is located at a position where the MTPA line Lm and the iso-torque line LT intersect. The MTPA point Pm is a point at which the current amplitude Ai is minimized on a predetermined iso-torque line LT. The MTPA point Pm is also a point on the predetermined iso-torque line LT at which a distance to the intersection point of the d-axis and the q-axis is shortest. The MTPA point Pm is also a point on the predetermined iso-torque line LT at which an effective value of a supply current supplied from the inverter circuit 85 to the motor 61 is minimized. For example, iso-torque lines LT1, LT2, and LT3 include the MTPA points Pm1, Pm2, and Pm3.

The iso-torque line LT extends such that an amount of change in the d-axis current Id is larger than an amount of change in the q-axis current Iq. On the iso-torque line LT, the q-axis current Iq increases on a positive side as the d-axis current Id increases on the positive side, and the q-axis current Iq decreases on the positive side as the d-axis current Id increases on a negative side. The larger the motor torque T is on the iso-torque line LT, the larger the q-axis current Iq is on the positive side. For example, in the iso-torque lines LT1, LT2, and LT3, the iso-torque line LT1 having the largest motor torque T is located at a position where the q-axis current Iq is largest on the positive side. The iso-torque line LT3 having the smallest motor torque T is located at a position where the q-axis current Iq is smallest.

The IPM motor tends to have a torque characteristic in which the iso-torque line LT extends to be inclined relative to the d-axis. The SPM motor may also have a torque characteristic in which the iso-torque line LT extends to be inclined relative to the d-axis. In the IPM motor, the MTPA characteristic in which the MTPA line Lm extends while bending from the intersection point of the d-axis and the q-axis is likely to be obtained. In the SPM motor, the MTPA characteristic in which the MTPA line Lm extends while bending from the intersection point of the d-axis and the q-axis may also be obtained.

In the dq coordinate system, a current amplitude line LAi of the current vector i extends to intersect the MTPA line Lm. The MTPA point Pm is located at a position where the MTPA line Lm and the current amplitude line LAi intersect. The current amplitude line LAi is a line indicating a combination of the d-axis current Id and the q-axis current Iq for the current vector i having a predetermined MTPA current amplitude Aim. The MTPA point Pm is a point at which the motor torque T is maximized on the current amplitude line LAi. For example, the MTPA points Pm1, Pm2, and Pm3 are points at which the motor torque T is maximized on the current amplitude lines LAi1, LAi2, and LAi3. The MTPA point Pm is a point where the current amplitude line LAi contacts the motor torque T.

The inverter control unit 81 has a function of performing the motor control. For example, the inverter control unit 81 performs the MTPA control using the MTPA characteristic. As shown in FIG. 4, the inverter control unit 81 includes, as functional blocks, an MTPA calculation unit 91, a current command unit 92, a current control unit 93, a voltage upper limit unit 94, a voltage command unit 95, a voltage difference unit 96, and a change information unit 97.

The MTPA calculation unit 91 calculates the d-axis MTPA current Idm and the q-axis MTPA current Iqm using the command torque T*. The command torque T* is calculated according to the command signal or the like from the integrated ECU 40. The command torque T* is a command value of the motor torque T. Therefore, the inverter control unit 81 performs the motor control such that the motor torque T becomes the command torque T*. The command torque T* is a torque required by the inverter device 80 to drive the motor 61. The command torque T* corresponds to a required torque. The command torque T* is a target value for the motor torque T, and may be referred to as a target torque. The command torque T* is set individually for each inverter device 80. For example, the command torque T* is set individually for each of the inverter devices 801, 802. The command torque T* is a target control amount controlled as a target in the motor control. As the target control amount, the torque, the current, the voltage, the motor rotation speed, or the like may be used.

The MTPA calculation unit 91 calculates the MTPA currents Idm, Iqm from the command torque T* using MTPA information. The MTPA information is information such as the MTPA line Lm indicating the MTPA characteristic. The MTPA information is correlation information indicating a correlation between the motor torque T and the current vector i in the MTPA characteristic. The MTPA information includes a correlation between the motor torque T and the d-axis current Id, the q-axis current Iq, the current amplitude Ai, or the current phase θi. As described above, in the MTPA line Lm of the present embodiment, both the d-axis MTPA current Idm and the q-axis MTPA current Iqm change according to the motor torque T. Therefore, the MTPA calculation unit 91 variably sets both the d-axis MTPA current Idm and the q-axis MTPA current Iqm according to the motor torque T.

For the MTPA calculation unit 91, calculating the MTPA currents Idm, Iqm means calculating the MTPA current amplitude Aim and the MTPA current phase θim. The MTPA current amplitude Aim is the current amplitude Ai at the MTPA point Pm, and the MTPA current phase θim is the current phase θi at the MTPA point Pm (see FIG. 6). For the MTPA calculation unit 91, calculating the MTPA currents Idm, Iqm means acquiring the position of the MTPA point Pm.

Examples of the MTPA information include a map, a calculation formula, and a function. Examples of the map include a conversion map for converting the command torque T* into the MTPA currents Idm, Iqm. The conversion map includes a correlation between the motor torque T and the d-axis current Id and the q-axis current Iq. Examples of the calculation formula include a conversion formula for converting the command torque T* into the MTPA currents Idm, Iqm. The conversion formula includes a correlation between the motor torque T and the d-axis current Id and the q-axis current Iq.

The current command unit 92 calculates a d-axis command current Id* and a q-axis command current Iq* using the d-axis MTPA current Idm and the q-axis MTPA current Iqm. The d-axis command current Id* is a command value of the d-axis current Id. The q-axis command current Iq* is a command value of the q-axis current Iq. For the current command unit 92, calculating the command currents Id*, Iq* means calculating a command current vector i*, a command current amplitude Ai*, and a command current phase θi*. The command current vector i* is a command value of the current vector i. The command current amplitude Ai* is a command value of the current amplitude Ai. The command current phase θi* is a command value of the current phase θi.

The current command unit 92 includes a command holding unit 92a and a command changing unit 92b. The command holding unit 92a sets the command currents Id*, Iq* to the same values as the MTPA currents Idm, Iqm. For example, the command holding unit 92a substitutes the MTPA currents Idm, Iqm for the command currents Id*, Iq*. The command changing unit 92b sets the command currents Id*, Iq* to values different from the MTPA currents Idm, Iqm. The command changing unit 92b calculates the command currents Id*, Iq* using the command torque T* and eVTOL information. The command torque T* is also input to the current command unit 92 in addition to the MTPA calculation unit 91.

The current control unit 93 performs a current control by a feedback control or the like. The current control unit 93 calculates a d-axis command voltage Vd* and a q-axis command voltage Vq* such that the currents Id, Iq of the motor 61 become the command currents Id*, Iq*. The d-axis command voltage Vd* is a command value of a d-axis voltage Vd. The q-axis command voltage Vq* is a command value of the q-axis voltage Vq. For example, the inverter control unit 81 calculates the d-axis current Id and the q-axis current Iq using detection results of the motor sensors. The current control unit 93 calculates the command voltages Vd*, Vq* such that deviations between the currents Id, Iq and the command currents Id*, Iq* are zero.

The inverter control unit 81 performs the motor control using the d-axis command voltage Vd* and the q-axis command voltage Vq*. For example, the inverter control unit 81 converts the command voltages Vd*, Vq* into command voltages of multiple phases. Then, the inverter control unit 81 generates a driving command using the command voltages of multiple phases, and outputs the driving command to the inverter circuit 85. The inverter circuit 85 performs the power conversion according to the driving command. The inverter circuit 85 supplies currents of multiple phases to the motor 61 as the supply currents.

The current command unit 92 acquires the eVTOL information from the voltage upper limit unit 94, the voltage command unit 95, the voltage difference unit 96, the change information unit 97, and the like. The eVTOL information is information indicating a state of the eVTOL 10. The eVTOL information includes flight information, airframe information, EPU information, battery information, and the like.

The flight information is information indicating a flight state of the eVTOL 10. The flight state of the eVTOL 10 changes according to the flight mode. Examples of the flight information include information on the flight mode, a flight altitude, a flight speed, a flight time, and a flight history of the eVTOL 10. Examples of the flight time include a continuous flight time during which the eVTOL 10 continuously flies. The flight history is information on past flight of the eVTOL 10. The flight time may be included in the flight history. The flight state of the eVTOL 10 corresponds to a moving state of the moving object. The flight information of the eVTOL 10 corresponds to moving information of the moving object. The moving history of the eVTOL 10 corresponds to the moving history of the moving object. The moving information is information on the moving state of the moving object.

The airframe information is information indicating a state of the airframe 11. Examples of the airframe information include information on a weight of the eVTOL 10, and information on the presence or absence of an abnormality of the eVTOL 10. Examples of the weight of the eVTOL 10 include a weight of the airframe 11, weights of the occupants, a load, and luggage. Examples of the information on the abnormality of the eVTOL 10 include abnormality information. Examples of the abnormality information include information indicating the presence or absence of the abnormality of the eVTOL 10, and information indicating a mode of the abnormality occurring in the eVTOL 10. The abnormality information is included in the eVTOL information. The abnormality information includes information on the presence or absence of an abnormality of the EPU 50, the motor device 60, and the inverter device 80, which will be described later.

The EPU information is information indicating a state of the EPU 50. Examples of the EPU information include information on a driving time of the EPU 50, information on the presence or absence of the abnormality of the EPU 50, and information on a driving history of the EPU 50. Examples of the EPU information include motor information and inverter information. The driving history is information on past driving of the EPU 50. The driving time of the EPU 50 may be included in the driving history.

The motor information is information indicating a state of the motor device 60. The motor information includes information on the temperature, the rotation speed, a driving time, and a driving history of the motor 61. Examples of the temperature of the motor 61 include a temperature of the motor stator 62 or the motor rotor 63. Examples of the temperature of the motor rotor 63 include a temperature of the magnet. Examples of the driving time of the motor 61 include a driving continuation time during which the motor 61 is continuously driven. Examples of the motor information include information on the presence or absence of an abnormality of the motor device 60. The driving history is information on past driving of the motor device 60. The driving time of the motor device 60 may be included in the driving history.

The inverter information is information indicating a state of the inverter device 80. Examples of the inverter information include information on the temperature, a driving time, and a driving history of the inverter device 80. Examples of the driving time of the inverter device 80 include a driving continuation time during which the inverter control unit 81 continuously drives the inverter circuit 85. Examples of the inverter information include information on the presence or absence of an abnormality of the inverter device 80. The driving history is a record related to past driving of the inverter device 80. The driving time of the inverter device 80 may be included in the driving history.

The battery information is information indicating a state of the battery 31. Examples of the battery information include information on the temperature and the state of charge of the battery 31. Examples of the battery information include information on the presence or absence of an abnormality of the battery 31.

The voltage upper limit unit 94 calculates a voltage upper limit value Vul using the eVTOL information or the like. The voltage upper limit value Vul is an upper limit value of the voltage that the inverter circuit 85 can output to the motor 61. The voltage upper limit value Vul is calculated according to a voltage applied from the battery 31 to the inverter circuit 85. For example, the voltage upper limit unit 94 sets the voltage upper limit value Vul to the same value as the voltage of the battery 31.

The voltage command unit 95 calculates a command voltage amplitude Av*. The command voltage amplitude Av* is an amplitude of a command voltage vector V*. The command voltage amplitude Av* indicates magnitude of the command voltage vector V*. The command voltage vector V* is a command value of a voltage vector V. The command voltage vector V* is calculated from the command voltages Vd*, Vq*. The voltage command unit 95 calculates the command voltage amplitude Av* using the d-axis command voltage Vd* and the q-axis command voltage Vq*. For example, the voltage command unit 95 calculates the command voltage amplitude Av* using Formula F1 shown in FIG. 4. The voltage command unit 95 receives the d-axis command voltage Vd* and the q-axis command voltage Vq* from the current control unit 93.

The voltage difference unit 96 calculates a voltage difference ΔV using the voltage upper limit value Vul and the command voltage amplitude Av*. The voltage difference ΔV is a difference between the voltage upper limit value Vul and the command voltage amplitude Av*. The voltage difference unit 96 calculates, as the difference, a value obtained by subtracting the command voltage amplitude Av* from the voltage upper limit value Vul.

The change information unit 97 acquires change information. The change information is information necessary for the command changing unit 92b to change the command currents Id*, Iq* from the MTPA currents Idm, Iqm. The change information is included in the eVTOL information. Examples of the change information include the state of charge and the temperature of the battery 31, the temperature and driving continuation time of the motor 61, and the temperature and driving continuation time of the inverter device 80. The change information includes information indicating the flight mode including the take-off and the landing of the eVTOL 10.

The current command unit 92 calculates the command currents Id*, Iq* using the voltage difference ΔV and the change information. For example, when the voltage difference ΔV is a value indicating that the command voltage amplitude Av* is equal to or less than the voltage upper limit value Vul, the current command unit 92 calculates the command currents Id*, Iq* by the command holding unit 92a. On the other hand, when the voltage difference ΔV is a value indicating that the command voltage amplitude Av* is larger than the voltage upper limit value Vul, the current command unit 92 calculates the command currents Id*, Iq* by the command changing unit 92b. The command changing unit 92b calculates the command currents Id*, Iq* using the change information in the eVTOL information.

In FIG. 4, the MTPA calculation unit 91 is illustrated as MTPA, the current command unit 92 is illustrated as CCD, the command holding unit 92a is illustrated as CHP, the command changing unit 92b is illustrated as CCP, and the current control unit 93 is illustrated as FBU. The voltage upper limit unit 94 is illustrated as ULS, the voltage command unit 95 is illustrated as VCU, and the change information unit 97 is illustrated as IAU.

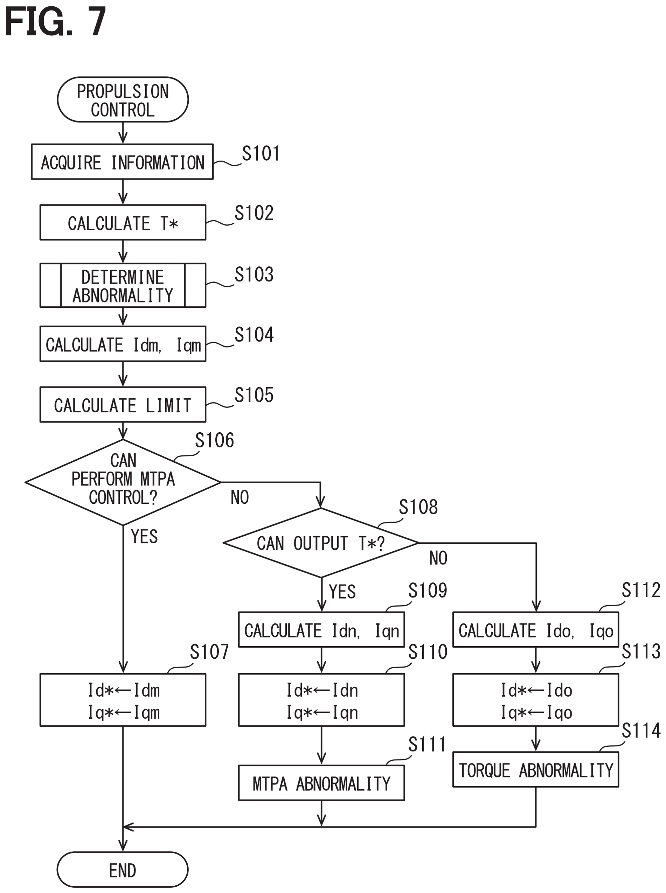

The inverter control unit 81 performs a propulsion control process. The propulsion control process will be described with reference to a flowchart of FIG. 7. The inverter control unit 81 repeatedly executes the propulsion control process at a predetermined control cycle. The inverter control unit 81 has a function of performing processing in each step of the propulsion control process.

In the present embodiment, the inverter control unit 81 of each of the inverter devices 801, 802 performs the propulsion control process. The propulsion control processes performed by the inverter control units 81 are basically the same. Here, basically, the propulsion control process performed by the first inverter device 801 will be described.

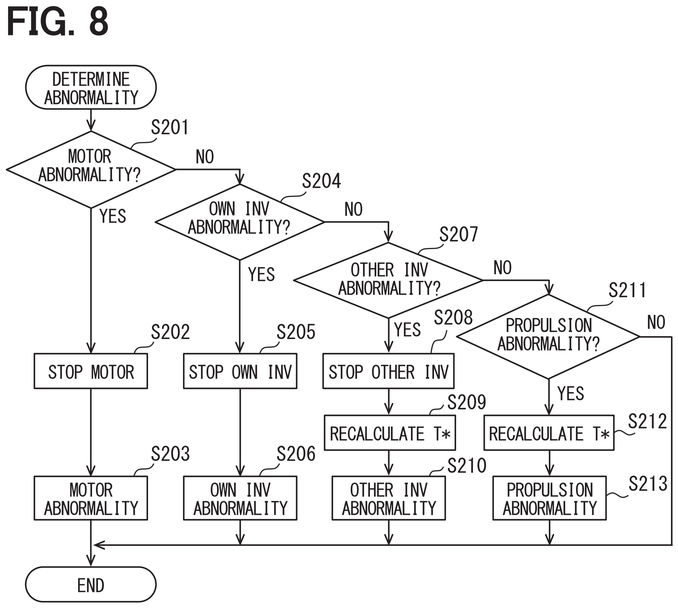

In the propulsion control process performed by the first inverter device 801, the first inverter device 801 may be referred to as an own inverter device, and the second inverter device 802 may be referred to as the other inverter device. In FIG. 8, the first inverter device 801 is illustrated as own INV, and the second inverter device 802 is illustrated as the other INV.

In the second inverter device 802, the propulsion control process is performed as in the first inverter device 801. In the propulsion control process performed by the second inverter device 802, the second inverter device 802 corresponds to the own inverter device, and the first inverter device 801 corresponds to the other inverter device. In the present embodiment, description of the propulsion control process performed by the second inverter device 802 will be omitted.

As shown in FIG. 7, the inverter control unit 81 acquires the eVTOL information in step S101. The eVTOL information corresponds to moving object information or flight vehicle information. The inverter control unit 81 acquires the state of the eVTOL 10 by acquiring information on the eVTOL 10. The state of the eVTOL 10 includes the flight state of the eVTOL 10, a control state of the motor 61, an abnormal state of the eVTOL 10, and the like. A function of performing the processing in step S101 in the inverter control unit 81 corresponds to a state acquisition unit.

In step S102, the inverter control unit 81 calculates the command torque T*. The inverter control unit 81 calculates the command torque T* according to the required output or the like for one propulsion device 15. The required output for one propulsion device 15 is included in the eVTOL information. Therefore, the inverter control unit 81 calculates the command torque T* using the eVTOL information. The command torque T* is a parameter indicating the control state of the motor 61 by the inverter control unit 81. The command torque T* is information related to control on the motor 61 and corresponds to control information. The control information is information for the inverter control unit 81 to perform the motor control. The control information is also information indicating the control state of the motor 61. As parameters indicating the control state of the motor 61, the command currents Id*, Iq*, the command current amplitude Ai*, the command voltage amplitude Av*, and the like may be used.

For example, it is assumed that the integrated ECU 40 outputs the required output for one propulsion device 15 to the inverter control unit 81. In this case, the inverter control unit 81 calculates the command torque T* for each of the inverter devices 801, 802 such that the required output for one propulsion device 15 is shared by the inverter devices 801, 802. For example, the inverter control unit 81 calculates the command torque T* for the first inverter device 801 such that the inverter devices 801, 802 each share 50% of the required output for one propulsion device 15. The information on the command torque T* may be shared by the inverter devices 801, 802 by exchanging the information between the inverter control units 81 of the inverter devices 801, 802.

The inverter control unit 81 performs an abnormality determination process in step S103. The abnormality determination process will be described with reference to a flowchart of FIG. 8.

As shown in FIG. 8, the inverter control unit 81 performs abnormality determination of the motor device 60 in step S201. In the abnormality determination, it is determined whether the abnormality of the motor device 60 occurs using the eVTOL information. When the abnormality of the motor device 60 occurs, the inverter control unit 81 proceeds to step S202. The abnormality of the motor device 60 is included in the EPU abnormality. Examples of the abnormality of the motor device 60 include an abnormality of the motor 61 and an abnormality of the motor housing 70.

The EPU abnormality is the abnormality of the EPU 50. The EPU abnormality is an abnormality related to the motor 61 and corresponds to a motor-related abnormality. Examples of the EPU abnormality include the abnormality of the motor device 60 and the abnormality of the inverter device 80. The EPU abnormality is an abnormality occurring in the propulsion device 15. Therefore, the EPU abnormality also includes an abnormality of the propeller 20, an abnormality of the gear 53, and the like.

The inverter control unit 81 stops the driving of the motor 61 in step S202. For example, information instructing to stop the driving of the motor 61 is shared between the inverter devices 801, 802. Then, the inverter control unit 81 of each of the inverter devices 801, 802 stops the power supply to the motor 61. The inverter control unit 81 performs motor abnormality processing in step S203. In the motor abnormality processing, the occurrence of the abnormality of the motor device 60, the stop of the driving of the motor 61, or the like is notified to the integrated ECU 40, the pilot, or the like.

When no abnormality of the motor device 60 occurs, the inverter control unit 81 proceeds to step S204 and performs abnormality determination of the first inverter device 801. That is, in step S204, abnormality determination of the own inverter device is performed. In the abnormality determination, it is determined whether an abnormality of the first inverter device 801 occurs using the eVTOL information. When the abnormality of the first inverter device 801 occurs, the inverter control unit 81 proceeds to step S205. The abnormality of the first inverter device 801 is included in the EPU abnormality. Examples of the abnormality of the first inverter device 801 include an abnormality of the inverter circuit 85, an abnormality of the inverter control unit 81, and an abnormality of the inverter housing 90.

In step S205, the inverter control unit 81 stops driving the first inverter device 801. That is, in step S205, the driving of the own inverter device is stopped. For example, the inverter control unit 81 stops the power supply from the first inverter device 801 to the motor 61.

In step S206, the inverter control unit 81 performs inverter abnormality processing for the first inverter device 801. That is, in step S206, the inverter abnormality processing for the own inverter device is performed. In the inverter abnormality processing, the occurrence of the abnormality of the first inverter device 801, the stop of the driving of the first inverter device 801, and the like are notified to the integrated ECU 40, the pilot, the second inverter device 802, and the like.

When no abnormality occurs in the first inverter device 801, the inverter control unit 81 proceeds to step S207 and performs abnormality determination of the second inverter device 802. That is, in step S207, abnormality determination of the other inverter device is performed. In the abnormality determination, it is determined whether an abnormality of the second inverter device 802 occurs using the eVTOL information. When the abnormality of the second inverter device 802 occurs, the inverter control unit 81 proceeds to step S208. The abnormality of the second inverter device 802 is included in the EPU abnormality, and corresponds to a driving unit abnormality. The driving unit abnormality is an abnormality related to the inverter circuit 85 in the second inverter device 802.

In step S208, the inverter control unit 81 performs processing for stopping the driving of the second inverter device 802. That is, in step S208, processing for stopping the driving of the other inverter device is performed. For example, the inverter control unit 81 outputs a signal for stopping the driving of the second inverter device 802 to the second inverter device 802.

In step S209, the inverter control unit 81 recalculates the command torque T* for the first inverter device 801. That is, in step S209, the command torque T* for the own inverter device is recalculated. The inverter control unit 81 calculates the command torque T* using the abnormality information related to the second inverter device 802. The abnormality information includes information indicating an abnormality mode of the second inverter device 802. The inverter control unit 81 updates the command torque T* calculated in step S102 to the command torque T* calculated in step S209. For example, the inverter control unit 81 calculates the command torque T* for the first inverter device 801 such that the first inverter device 801 bears the entire required output for one propulsion device 15.

In step S210, the inverter control unit 81 performs the inverter abnormality processing for the second inverter device 802. That is, in step S210, the inverter abnormality processing for the other inverter device is performed. In the inverter abnormality processing, the occurrence of the abnormality of the second inverter device 802, the stop of the driving of the second inverter device 802, or the like is notified to the integrated ECU 40, the pilot, or the like.

When no abnormality occurs in the second inverter device 802, the inverter control unit 81 proceeds to step S211 and performs propulsion abnormality determination. In the propulsion abnormality determination, it is determined whether driving of another propulsion device 15 is stopped. Examples of the case where the driving of the other propulsion device 15 is stopped include a case where the rotation of the propeller 20 of the other propulsion device 15 is stopped. Examples of the propulsion abnormality include stopping of at least one propeller 20 in the eVTOL 10. The propulsion abnormality may include a decrease in the output of at least one propulsion device 15. In this case, a decrease in the output torque of the motor 61 may be included in the propulsion abnormality.

In step S212, the inverter control unit 81 recalculates the command torque T* for the first inverter device 801. The inverter control unit 81 calculates the command torque T* using the abnormality information on other propulsion devices 15. The inverter control unit 81 updates the command torque T* calculated in step S102 to the command torque T* calculated in step S212. When driving of another propulsion device 15 is stopped, the integrated ECU 40 may change outputs of the remaining propulsion devices 15 to continue the flight of the eVTOL 10. In this case, the integrated ECU 40 changes the required output for one propulsion device 15 and outputs the changed required output to the inverter control unit 81. The inverter control unit 81 calculates the command torque T* according to the changed required output or the like.

In step S213, the inverter control unit 81 performs propulsion abnormality processing. In the propulsion abnormality processing, the stop of the driving of other propulsion devices 15 is notified to the integrated ECU 40, the pilot, or the like.

Returning to FIG. 7, after the abnormality determination process, the inverter control unit 81 proceeds to step S104 and calculates the MTPA currents Idm, Iqm. That is, the inverter control unit 81 calculates the MTPA current amplitude Aim and the MTPA current phase θim by the MTPA calculation unit 91. The MTPA current phase θim is a smallest current phase θi in a range in which the motor torque T becomes the command torque T*, and corresponds to a minimization phase. A function of performing the processing in step S104 in the inverter control unit 81 corresponds to a minimization phase calculation unit.

In step S105, the inverter control unit 81 calculates a current limit line Ui. The current limit line Ui indicates a range of the current vector i that can be output by the inverter circuit 85. For example, the current limit line Ui indicates a range of the d-axis current Id and the q-axis current Iq that can be output by the inverter circuit 85. An inner region of the current limit line Ui is a range of the current vector i that can be output by the inverter circuit 85. An outer region of the current limit line Ui is a range in which the inverter circuit 85 does not output or cannot output the current vector i. The outer region of the current limit line Ui is a current limiting range in which the output of the current vector i from the inverter circuit 85 is limited. The current limit line Ui is included in the inner region of the current limit line Ui.

A position and magnitude of the current limit line Ui change according to the state of the eVTOL 10. For example, the position and magnitude of the current limit line Ui change according to the states of the motor device 60, the inverter device 80, and the battery 31. The change in the position and the magnitude of the current limit line Ui means a change in a range of the motor torque T that can be output by the motor 61 or a range of the current vector i supplied to the motor 61. The inverter control unit 81 calculates the position and magnitude of the current limit line Ui using the eVTOL information such as the motor information, the inverter information, and the battery information.

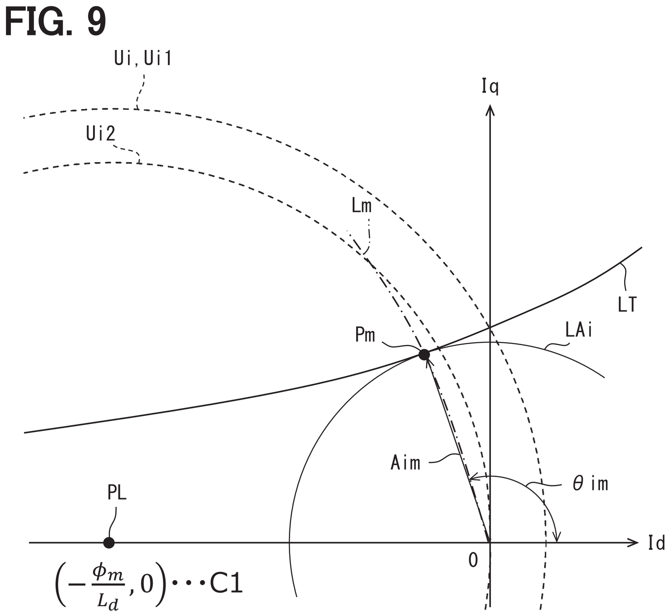

As shown in FIG. 9, the current limit line Ui is a line extending circularly around a limit center point PL. The position of the current limit line Ui is determined by a position of the limit center point PL. The limit center point PL is on the d-axis. For example, the limit center point PL is at coordinates C1 shown in FIG. 9. In the coordinates C1, Ld is a d-axis steady inductance, and φm is a coil interlinkage magnetic flux based on the permanent magnet.

A radius of the current limit line Ui tends to increase as the rotation speed of the motor 61 or the propeller 20 decreases, and tends to decrease as the rotation speed of the motor 61 and the propeller 20 increases. The radius of the current limit line Ui tends to increase as the voltage of the battery 31 increases within a normal range, and tends to decrease as the voltage of the battery 31 decreases. That is, the radius of the current limit line Ui tends to increase as the voltage applied to the inverter circuit 85 increases within the normal range, and tends to decrease as the voltage applied to the inverter circuit 85 decreases. Further, the radius of the current limit line Ui tends to increase as the temperature of the battery 31 increases in a normal range, and tends to decrease as the temperature of the battery 31 decreases. When the temperature of the battery 31 increases beyond the normal range, the radius of the current limit line Ui tends to decrease. Regarding the radius of the current limit line Ui, the radius of the current limit line Ui tends to decrease as the temperature of the motor device 60 or the inverter device 80 increases.

The current limit line Ui indicates a range of the current amplitude Ai or a range of the current phase θi that can be output by the inverter circuit 85. The current limit line Ui indicates an allowable range of the current amplitude Ai and the current phase θi. For example, the inner region of the current limit line Ui is the allowable range for the current amplitude Ai and the current phase θi. The inner region of the current limit line Ui corresponds to a phase range. For the current phase θi, the current limit line Ui is a limit value of the phase range. For example, the current limit line Ui indicates a lower limit value of the phase range of the current phase θi.

Returning to FIG. 7, in step S106, the inverter control unit 81 determines whether the inverter control unit 81 can perform the MTPA control. In the determination, it is determined whether the state of the motor device 60, the inverter device 80, the battery 31, and the like is a state in which the MTPA control can be performed. The inverter control unit 81 determines whether the MTPA point Pm is on an inner side of the current limit line Ui. When the MTPA point Pm is on the inner side of the current limit line Ui, the inverter control unit 81 determines that the MTPA control can be performed.

The inverter control unit 81 determines whether the MTPA current phase θim is included in the allowable range of the current phase θi by determining whether the MTPA point Pm is on the inner side of the current limit line Ui. When the MTPA point Pm is on the inner side of the current limit line Ui, the inverter control unit 81 determines that the MTPA current phase θim is included in the allowable range of the current phase θi.

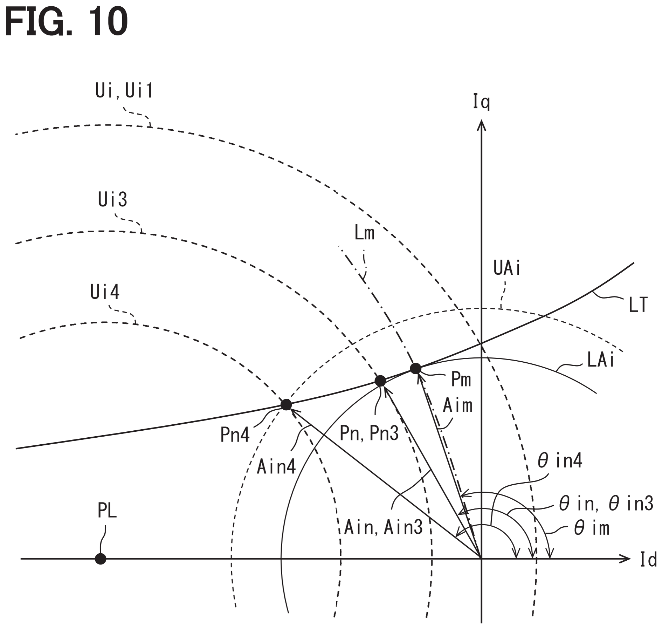

For example, in FIG. 9, when the current limit line Ui is a current limit line Ui1 or a current limit line Ui2, the inverter control unit 81 determines that the MTPA point Pm is on the inner side of the current limit line Ui. On the other hand, in FIG. 10, when the current limit line Ui is a current limit line Ui3 or a current limit line Ui4, the inverter control unit 81 determines that the MTPA point Pm is not on the inner side of the current limit line Ui. In FIGS. 9 and 10, the motor torque T on the iso-torque line LT is the command torque T*.

When the inverter control unit 81 can perform the MTPA control, the inverter control unit 81 proceeds to step S107 and performs command holding processing. In the command holding processing, the inverter control unit 81 sets the MTPA currents Idm, Iqm as the command currents Id*, Iq* by the command holding unit 92a. In other words, the inverter control unit 81 sets the MTPA current amplitude Aim and the MTPA current phase θim as the command current amplitude Ai* and the command current phase θi*. The command current phase θi* is a target value of the current phase θi and corresponds to a target phase. A function of performing the processing in step S107 in the inverter control unit 81 corresponds to an allowance setting unit.

By the processing in steps S104 and S107, the inverter control unit 81 adjusts the current phase θi such that the current amplitude Ai is minimized within a range in which the motor torque T becomes the command torque T*. The inverter control unit 81 adjusts the current phase θi such that the current phase θi increases as the command torque T* increases, by the processing in steps S104 and S107. A function of performing the processing in steps S104 and S107 in the inverter control unit 81 corresponds to a minimization adjustment unit.

The inverter control unit 81 adjusts the current phase θi according to the command torque T* by the processing in steps S104 and S107. A function of performing the processing in steps S104 and S107 in the inverter control unit 81 corresponds to a torque adjustment unit. The inverter control unit 81 adjusts the current phase θi according to the control state of the motor 61 and the state of the eVTOL 10 by the processing in steps S102, S104, and S107. A function of performing the processing in S102, S104, and S107 in the inverter control unit 81 corresponds to a control adjustment unit and a phase adjustment unit.

When the command torque T* is recalculated in steps S209 and S212 in the abnormality determination process, the inverter control unit 81 adjusts the current phase θi according to a state such as the abnormal state of the eVTOL 10, by the processing in steps S209, S212, S104, and S107. A function of performing the processing in steps S209, S212, S104, and S107 in the inverter control unit 81 corresponds to an abnormality adjustment unit and the phase adjustment unit.

When the command torque T* is recalculated in steps S209 and S212 in the abnormality determination process, the command current phase θi* calculated in steps S104 and S107 corresponds to an abnormality-time phase. In this case, the inverter control unit 81 adjusts the current phase θi such that the current phase θi becomes the abnormality-time phase in steps S209, S212, S104, and S107. A function of performing the processing in steps S209, S212, S104, and S107 in the inverter control unit 81 corresponds to an abnormal-time adjustment unit. The abnormality-time phase is a current phase indicating that a motor abnormality occurs. The abnormality-time phase is a phase different from a normal-time phase to be described later.

On the other hand, when the command torque T* is not recalculated in steps S209 and S212 after the command torque T* is calculated in step S102, the command current phase θi* calculated in steps S104 and S107 corresponds to the normal-time phase. In this case, the inverter control unit 81 adjusts the current phase θi such that the current phase θi becomes the normal-time phase in steps S102, S104, and S107. A function of performing the processing in steps S102, S104, and S107 in the inverter control unit 81 corresponds to a normal-time adjustment unit. The normal-time phase is a current phase θi indicating that no motor abnormality occurs.

After setting the command currents Id*, Iq*, the inverter control unit 81 performs the motor control using the MTPA currents Idm, Iqm based on the command currents Id*, Iq*. That is, the inverter control unit 81 performs the motor control using the MTPA current amplitude Aim and the MTPA current phase θim based on the command current amplitude Ai* and the command current phase θi*.

When the inverter control unit 81 cannot perform the MTPA control, the inverter control unit 81 proceeds to step S108. In step S108, the inverter control unit 81 determines whether the motor 61 can output the command torque T*. In the determination, it is determined whether the state of the motor device 60, the inverter device 80, the battery 31, or the like is a state in which the motor 61 can output the command torque T*. The inverter control unit 81 determines whether a torque achievement point Pn is on an inner side of an amplitude upper limit line UAi. The amplitude upper limit line UAi is calculated by the inverter control unit 81. When the torque achievement point Pn is on the inner side of the amplitude upper limit line UAi, the inverter control unit 81 determines that the motor 61 can output the command torque T*. The inner side of the amplitude upper limit line UAi means a region including the amplitude upper limit line UAi.

In FIG. 10, the amplitude upper limit line UAi indicates a range of the current amplitude Ai that can be output by the inverter circuit 85. The amplitude upper limit line UAi indicates an allowable range of the current amplitude Ai. An inner region of the amplitude upper limit line UAi is an allowable range for the current amplitude Ai and corresponds to an amplitude range. For the current amplitude Ai, the amplitude upper limit line UAi is a limit value of the amplitude range. For example, the amplitude upper limit line UAi indicates an upper limit value of the amplitude range of the current amplitude Ai.

The inner region of the amplitude upper limit line UAi is a range of the current amplitude Ai that can be output by the inverter circuit 85. An outer region of the amplitude upper limit line UAi is a range in which the inverter circuit 85 does not output or cannot output the current amplitude Ai. The amplitude upper limit line UAi is a line extending circularly around the intersection point of the d-axis and the q-axis. Magnitude of the amplitude upper limit line UAi changes according to the state of the eVTOL 10. For example, the magnitude of the amplitude upper limit line UAi changes according to the states of the motor device 60 and the inverter device 80, or the like. The inverter control unit 81 calculates the magnitude of the amplitude upper limit line UAi using the eVTOL information such as the motor information, the inverter information, and the battery information.

The torque achievement point Pn is a point indicating a current vector i for achieving the command torque T*. The torque achievement point Pn is on the iso-torque line LT indicating the command torque T*. The torque achievement point Pn is on an outer side of the current amplitude line LAi. The torque achievement point Pn being located on the outer side of the current amplitude line LAi indicates that the inverter control unit 81 cannot perform the MTPA control. Further, the torque achievement point Pn being located on the outer side of the current amplitude line LAi indicates that an achievement current amplitude Ain is larger than the MTPA current amplitude Aim and an achievement current phase θin is larger than the MTPA current phase θim. The achievement current amplitude Ain is the current amplitude Ai at the torque achievement point Pn. The achievement current phase θin is the current phase θin at the torque achievement point Pn.

The torque achievement point Pn indicates that the d-axis current Id is larger on the negative side than the MTPA point Pm on the predetermined iso-torque line LT. For example, a d-axis achievement current Idn is larger on the negative side than the d-axis MTPA current Idm. The d-axis achievement current Idn is the d-axis current Id at the torque achievement point Pn. The torque achievement point Pn indicates that the q-axis current Iq is larger on the positive side than the MTPA point Pm on the predetermined iso-torque line LT. For example, the q-axis achievement current Iqn is larger on the positive side than the q-axis MTPA current Iqm. The q-axis achievement current Iqn is the q-axis current Iq at the torque achievement point Pn.

The torque achievement point Pn is on the inner side of the amplitude upper limit line UAi. The torque achievement point Pn being on the outer side of the amplitude upper limit line UAi indicates that the inverter circuit 85 can output the current amplitude Ain at the torque achievement point Pn. That is, the torque achievement point Pn indicates that the motor 61 can output the command torque T*.

The torque achievement point Pn is an intersection point of the iso-torque line LT and the current limit line Ui. The torque achievement point Pn is the intersection point of the iso-torque line LT and the current limit line Ui and thereby indicates an upper limit of the current vector i that can be output by the inverter circuit 85. For example, the torque achievement point Pn indicates an upper limit value of the current amplitude Ai that can be output by the inverter circuit 85.

For example, in FIG. 10, when the current limit line Ui is the current limit line Ui3 or the current limit line Ui4, the inverter control unit 81 determines that the MTPA point Pm is not on the inner side of the current limit line Ui and torque achievement points Pn3, Pn4 are on the inner side of the amplitude upper limit line UAi. In this case, the inverter control unit 81 determines that the inverter control unit 81 cannot perform the MTPA control, but the motor 61 can output the command torque T*, and performs processing in steps S109 and S110.

In steps S109 and S110, the inverter control unit 81 calculates the command currents Id*, Iq* by the command changing unit 92b. In step S109, the inverter control unit 81 calculates the d-axis achievement current Idn and the q-axis achievement current Iqn. For the inverter control unit 81, calculating the achievement currents Idn, Iqn means acquiring the torque achievement point Pn. For the inverter control unit 81, calculating the achievement currents Idn, Iqn also means calculating the achievement current amplitude Ain and the achievement current phase θin. The torque achievement point Pn is a point at which the motor torque T can be held at the command torque T* even when the inverter control unit 81 cannot perform the MTPA control.

For example, in FIG. 10, when the current limit line Ui is the current limit line Ui3, the inverter control unit 81 acquires the torque achievement point Pn3 as the torque achievement point Pn. The torque achievement point Pn3 is an intersection point of the iso-torque line LT indicating the command torque T* and the current limit line Ui3. An achievement current amplitude Ain3 at the torque achievement point Pn3 is larger than the MTPA current amplitude Aim. An achievement current phase θin3 at the torque achievement point Pn3 is larger than the MTPA current phase θim.

When the current limit line Ui is the current limit line Ui4, the inverter control unit 81 acquires the torque achievement point Pn4 as the torque achievement point Pn. The torque achievement point Pn3 is an intersection point of the iso-torque line LT indicating the command torque T* and the current limit line Ui4. An achievement current amplitude Ain4 at the torque achievement point Pn4 is larger than the MTPA current amplitude Aim and the achievement current amplitude Ain3. An achievement current phase θin4 at the torque achievement point Pn4 is larger than the MTPA current phase θim and the achievement current phase θin3.

Between the MTPA point Pm and the torque achievement points Pn3 and Pn4, a difference between the d-axis MTPA current Idm and the d-axis achievement current Idn is larger than a difference between the q-axis MTPA current Iqm and the q-axis achievement current Iqn. Therefore, when the current vector i is changed from the MTPA point Pm to the torque achievement points Pn3 and Pn4, an amount of change in the d-axis current Id is larger than an amount of change in the q-axis current Iq. For example, in step S109, the inverter control unit 81 calculates the achievement currents Idn, Iqn such that an amount of change from the d-axis MTPA current Idm to the d-axis achievement current Idn is larger than an amount of change from the q-axis MTPA current Iqm to the q-axis achievement current Iqn.

Returning to FIG. 7, the inverter control unit 81 performs a command changing processing in step S110. The inverter control unit 81 sets the achievement currents Idn, Iqn as the command currents Id*, Iq*. In other words, the inverter control unit 81 sets the achievement current amplitude Ain and the achievement current phase θin as the command current amplitude Ai* and the command current phase θi*. The inverter control unit 81 performs the motor control using the achievement currents Idn, Iqn based on the command currents Id*, Iq*.

The achievement current phase θin is a limit value of the phase range in a range in which the motor torque T becomes the command torque T*. The achievement current phase θin corresponds to a limit phase. A function of performing the processing in steps S109 and S110 in the inverter control unit 81 corresponds to an upper limit setting unit.

The inverter control unit 81 adjusts the current phase θi according to the command torque T* by the processing in steps S109 and S110. A function of performing the processing in steps S109 and S110 in the inverter control unit 81 corresponds to the torque adjustment unit. Further, the inverter control unit 81 adjusts the current phase θi using the eVTOL information according to the control state of the motor 61 and the state of the eVTOL 10 by the processing in steps S102, S109, and S110. A function of performing the processing in S102, S109, and S110 in the inverter control unit 81 corresponds to the control adjustment unit and the phase adjustment unit.

When the command torque T* is recalculated in steps S209 and S212 in the abnormality determination process, the inverter control unit 81 adjusts the current phase θi according to a state such as the abnormal state of the eVTOL 10, by the processing in steps S209, S212, S109, and S110. A function of performing the processing in steps S209, S212, S109, and S110 in the inverter control unit 81 corresponds to the abnormality adjustment unit and the phase adjustment unit.

When the command torque T* is recalculated in steps S209 and S212 in the abnormality determination process, the command current phase θi* calculated in steps S109 and S110 corresponds to the abnormality-time phase. In this case, the inverter control unit 81 adjusts the current phase θi such that the current phase θi becomes the abnormality-time phase in steps S209, S212, S109, and S110. A function of performing the processing in steps S209, S212, S109, and S110 in the inverter control unit 81 corresponds to the abnormal-time adjustment unit.

On the other hand, when the command torque T* is not recalculated in steps S209 and S212 after the command torque T* is calculated in step S102, the command current phase θi* calculated in steps S109 and S110 corresponds to the normal-time phase. In this case, the inverter control unit 81 adjusts the current phase θi such that the current phase θi becomes the normal-time phase in steps S102, S109, and S110. A function of performing the processing in steps S102, S109, and S110 in the inverter control unit 81 corresponds to the normal-time adjustment unit.

The inverter control unit 81 performs MTPA abnormality processing in step S111. In the MTPA abnormality processing, a fact that the MTPA control on the motor 61 is not performed is notified to the integrated ECU 40, the pilot, or the like. For example, in the MTPA abnormality processing, it is notified that the current of the motor 61 tends to increase and the temperature of the motor 61 tends to rise, as compared with when the MTPA control is performed. In the MTPA abnormality processing, it is notified that the motor 61 can output the command torque T*. For example, in the MTPA abnormality processing, it is notified that the motor torque T is unlikely to be insufficient even when the MTPA control on the motor 61 is not performed.

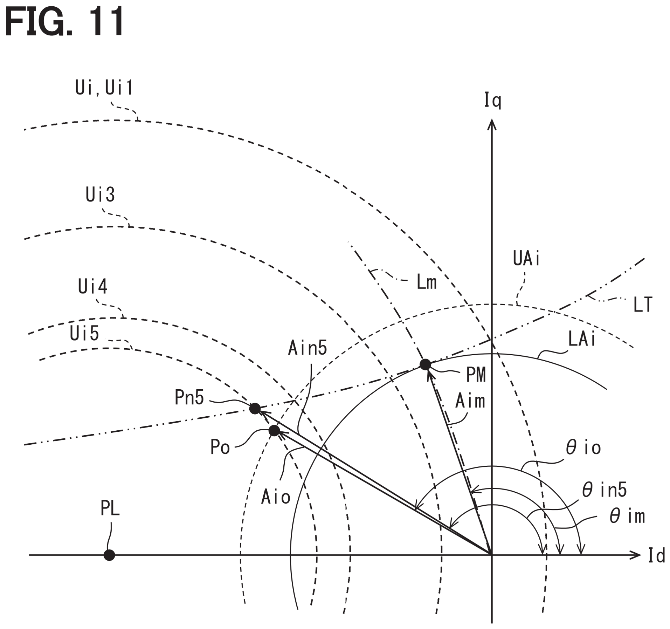

For example, in FIG. 11, when the current limit line Ui is a current limit line Ui5, the inverter control unit 81 determines that the MTPA point Pm is not on the inner side of the current limit line Ui and a torque achievement point Pn5 is not on the inner side of the amplitude upper limit line UAi. The torque achievement point Pn5 is an intersection point of the iso-torque line LT indicating the command torque T* and the current limit line Ui5. For example, the torque achievement point Pn5 is on an outer side of the amplitude upper limit line UAi. In this case, the inverter control unit 81 performs processing in steps S112 and S113 on the assumption that the inverter control unit 81 cannot perform the MTPA control and the motor 61 cannot output the command torque T*.

In steps S112 and S113, the inverter control unit 81 calculates the command currents Id*, Iq* by the command changing unit 92b. In step S112, the inverter control unit 81 calculates a d-axis reduction current Ido and a q-axis reduction current Iqo. The inverter control unit 81 acquires a torque reduction point Po by calculating the reduction currents Ido, Iqo. The torque reduction point Po is a point for reducing the motor torque T with respect to the iso-torque line LT indicating the command torque T*. The torque reduction point Po is a point located on the inner side of both the current limit line Ui and the amplitude upper limit line UAi and closest to the iso-torque line LT indicating the command torque T*. The torque reduction point Po is a point for preventing the motor torque T from being insufficient as much as possible when the inverter control unit 81 cannot perform the MTPA control and the motor 61 cannot output the command torque T*.

For example, the torque reduction point Po is an intersection point of the current limit line Ui and the amplitude upper limit line UAi. In FIG. 11, when the current limit line Ui is the current limit line Ui5, the torque reduction point Po is an intersection point of the current limit line Ui5 and the amplitude upper limit line UAi.

The torque reduction point Po is a point at which a reduction current amplitude Aio is smaller than the achievement current amplitude Ain with respect to the torque achievement point Pn5 on the outer side of the amplitude upper limit line UAi. The reduction current amplitude Aio is the current amplitude Ai at the torque reduction point Po. The torque reduction point Po is a point at which a reduction current phase θio is larger than the achievement current phase θin with respect to the torque achievement point Pn5. The reduction current phase θio is the current phase θi at the torque reduction point Po. For the inverter control unit 81, calculating the reduction currents Ido, Iqo also means calculating the reduction current amplitude Aio and the reduction current phase θio.

Returning to FIG. 7, the inverter control unit 81 performs the command changing processing in step S113. As the command changing processing, the inverter control unit 81 calculates the command currents Id*, Iq* by substituting the reduction currents Ido, Iqo for the command currents Id*, Iq*. The inverter control unit 81 performs the motor control using the reduction currents Ido, Iqo based on the command currents Id*, Iq*.

The achievement current amplitude Ain is the current amplitude Ai corresponding to the achievement current phase θin, and corresponds to a limit amplitude. In steps S112 and S113, the inverter control unit 81 adjusts the current phase θi such that the motor torque T becomes smaller than the command torque T*. A function of performing the processing in steps S112 and S113 in the inverter control unit 81 corresponds to a torque reduction unit.

The inverter control unit 81 adjusts the current phase θi according to the command torque T* by the processing in steps S112 and S113. A function of performing the processing in steps S112 and S113 in the inverter control unit 81 corresponds to the torque adjustment unit. The inverter control unit 81 adjusts the current phase θi according to the control state of the motor 61 and the state of the eVTOL 10 by the processing in steps S102, S112, and S113. A function of performing the processing in S102, S112, and S113 in the inverter control unit 81 corresponds to the control adjustment unit and the phase adjustment unit.

When the command torque T* is recalculated in steps S209 and S212 in the abnormality determination process, the inverter control unit 81 adjusts the current phase θi according to a state such as the abnormal state of the eVTOL 10, by the processing in steps S209, S212, S112, and S113. A function of performing the processing in steps S209, S212, S112, and S113 in the inverter control unit 81 corresponds to the abnormality adjustment unit and the phase adjustment unit.

When the command torque T* is recalculated in steps S209 and S212 in the abnormality determination process, the command current phase θi* calculated in steps S112 and S113 corresponds to the abnormality-time phase. In this case, the inverter control unit 81 adjusts the current phase θi such that the current phase θi becomes the abnormality-time phase in steps S209, S212, S112, and S113. A function of performing the processing in steps S209, S212, S112, and S113 in the inverter control unit 81 corresponds to the abnormal-time adjustment unit.

On the other hand, when the command torque T* is not recalculated in steps S209 and S212 after the command torque T* is calculated in step S102, the command current phase θi* calculated in steps S112 and S113 corresponds to the normal-time phase. In this case, the inverter control unit 81 adjusts the current phase θi such that the current phase θi becomes the normal-time phase in steps S102, S112, and S113. A function of performing the processing in steps S102, S112, and S113 in the inverter control unit 81 corresponds to the normal-time adjustment unit.

In step S114, the inverter control unit 81 performs torque abnormality processing. In the torque abnormality processing, the integrated ECU 40, the pilot, or the like is notified that the motor 61 cannot output the command torque T* in a state in which the MTPA control on the motor 61 is not performed. For example, in the torque abnormality processing, it is notified that the motor torque T is likely to be insufficient in addition to the contents notified in the MTPA abnormality processing.

In the EPU 50, the smaller a current such as the current vector i is, the more heat generation amount can be reduced. In the EPU 50, as the heat generation amount increases, a mechanism for securing a cooling performance is required, and thus the EPU 50 tends to be heavy. For example, since a cooling performance of the EPU 50 of an air-cooling type tends to be insufficient, a liquid-cooling type needs to be employed if the heat generation amount of the EPU 50 cannot be reduced. In this case, in the EPU 50, a passage and a pump for circulating a coolant are required, and thus a weight tends to increase. In order to restrict insufficiency of the cooling performance in the EPU 50 of the air-cooling type, it is necessary to provide a large-sized air-cooling fan or many heat dissipation fins in the EPU 50, and the weight tends to increase.

With respect to such an increase in the weight of the EPU 50, achieving the required torque with a minimum current by the MTPA control is extremely useful in an aircraft in which the EPU 50 is strongly required to be lightweight.

A fact that the required torque cannot be achieved in vehicles or ships means that a required speed or a required acceleration cannot be achieved. Meanwhile, in an aircraft such as the eVTOL 10, the fact that the required torque cannot be achieved means that an airframe posture during flight is likely to be unstable. Therefore, in the aircraft, when the required torque cannot be achieved, there is a concern that a more serious situation than in the vehicles or ships may occur. Therefore, in the aircraft, the motor control is normally performed at a current phase at which the current is minimum. When the minimum current cannot be achieved even though the required torque can be achieved in normal times, it is also extremely important to adjust the current phase such that the required torque can be achieved even if the current increases in control on an electric propulsion device of the aircraft.

In the propulsion device 15, a relationship between the MTPA point Pm and the current limit line Ui can be adjusted in a design stage. For example, under a driving condition in which the motor output is continuously equal to or less than a rated output as a driving condition of the motor 61, the propulsion device 15 is preferably designed such that the MTPA point Pm is present on the inner side of the current limit line Ui as a range of the current that can be output by the inverter circuit 85. Further, the propulsion device 15 may be designed such that the MTPA point Pm is not present on the inner side of the current limit line Ui under a driving condition in which the motor output continuously exceeds the rated output. Examples of the case where the motor output exceeds the rated output include a case where the motor output exceeds the rated output for a finite period of time and a case where the motor output exceeds a maximum output in designed.

In a configuration in which the propulsion device 15 is designed such that the MTPA point Pm is present on the inner side of the current limit line Ui under any driving condition as the driving condition of the motor 61, there is a concern that efficiency of the motor 61 may be reduced under a condition in which the motor output is continuously less than the rated output which is often used in normal times. In the configuration, there is a concern that a power supply system may be excessively designed and cause an increase in weight and cost. For example, even in an assumed worst case, when the MTPA characteristic is designed to fall within the current limiting range among ranges for specifications, there is a concern that the efficiency of the motor 61 may decrease, the weight and cost of the propulsion device 15 may increase, and the like.

Meanwhile, as the driving condition of the motor 61, under a frequently used condition in which the motor output is continuously equal to or less than the rated output, it is preferable to design the propulsion device 15 such that the MTPA can be achieved by setting the MTPA point Pm to be present on the inner side of the current limit line Ui. As the driving condition of the motor 61, under a less frequently used condition in which the motor output continuously exceeds the rated output, it is preferable to design the propulsion device 15 such that the required torque can be achieved by shifting the current phase. By designing the propulsion device 15 as described above, it is possible to optimize the efficiency, weight, cost, and torque performance of the motor 61.

According to the present embodiment described above, the inverter control unit 81 adjusts the current phase θi according to the state of the eVTOL 10 for the current vector i. In the configuration, the motor torque T can be adjusted by adjusting the current phase θi. Therefore, the motor torque T can be increased without increasing the current amplitude Ai of the current vector i. Since the efficiency of the motor 61 can be increased by adjusting the current phase θi in this manner, energy saving of the propulsion device 15 can be realized.

According to the present embodiment, the inverter control unit 81 adjusts the current phase θi according to the control state of the motor 61 and the abnormal state of the eVTOL 10. In the configuration, even when the control state of the motor 61 changes, the current phase θi can be adjusted to maximize the efficiency of the motor 61. Even when the abnormality of the eVTOL 10 occurs, the current phase θi can be adjusted to maximize the efficiency of the motor 61. In this way, even when the state of the eVTOL 10 or the motor 61 changes, a decrease in the efficiency of the motor 61 can be restricted by adjusting the current phase θi.

According to the present embodiment, the inverter control unit 81 adjusts the current phase θi according to the command torque T*. In the configuration, the current phase θi can be adjusted such that the current amplitude Ai is minimized among the current vectors i that each can achieve the command torque T*. Therefore, the efficiency of the motor 61 with respect to the command torque T* can be maximized by adjusting the current phase θi.

According to the present embodiment, the inverter control unit 81 adjusts the current phase θi such that the current amplitude Ai is minimized in the range in which the motor torque T becomes the command torque T*. That is, the inverter control unit 81 adjusts the current phase θi such that the effective value of the supply current to the motor 61 necessary for achieving the required torque is minimized. In the configuration, the efficiency of the motor 61 with respect to the command torque T* can be maximized. Therefore, in the propulsion device 15, energy consumption for the command torque T* can be minimized.

In the propulsion device 15, even when the current amplitude Ai is the same, the magnitude of the motor torque T that can be output by the current vector i is different by making the current phase θi different. Therefore, by adjusting the current phase θi such that the current amplitude Ai for achieving the command torque T* is minimized, the command torque T* can be achieved under a most efficient condition for the motor 61. That is, the efficiency of the motor 61 can be maximized by adjusting the current phase θi such that the effective value of the current supplied from the inverter circuit 85 to the motor 61 is minimized.

The motor 61 may have such an MTPA characteristic that the MTPA current amplitude Aim increases as the maximum torque Tmax increases. That is, the motor 61 may have such a characteristic that the current phase θi at which the current amplitude Ai with respect to the predetermined motor torque T is minimized increases as the motor torque T increases.

Meanwhile, according to the present embodiment, the inverter control unit 81 adjusts the current phase θi such that the current phase θi increases as the command torque T* increases. In the configuration, the command current amplitude Ai* with respect to the predetermined command torque T* is easily minimized by simply adjusting the command current phase θi to increase as the command torque T* increases. Therefore, the efficiency of the motor 61 can be adjusted to a maximum state by performing a simple phase adjustment of increasing the current phase θi as the command torque T* increases.

In the present embodiment, when a voltage of the electric power supplied to the inverter circuit 85 fluctuates, the range of the motor torque T that can be output by the motor 61 and the range of the current vector i supplied to the motor 61 change. For example, it is assumed that the command current amplitude Ai* and the command current phase θi* for satisfying the command torque T* are achieved by applying a normal voltage to the inverter circuit 85 in normal times. Meanwhile, when the voltage applied to the inverter circuit 85 is lower than the normal voltage, there is a concern that the command current amplitude Ai* and the command current phase θi* cannot be achieved.

Meanwhile, in the present embodiment, the current phase θi is adjusted via the current limit line Ui according to the voltage applied to the inverter circuit 85 such that the motor torque T becomes the command torque T*. For example, when the voltage applied to the inverter circuit 85 is lower than the normal voltage, the current phase θi is adjusted by reducing the radius of the current limit line Ui. In this case, the motor 61 is driven such that the motor torque T becomes the command torque T* by allowing a condition that the current amplitude Ai increases as compared with the case where the normal voltage is applied to the inverter circuit 85. In this way, even when the voltage applied to the inverter circuit 85 changes, the command torque T* for the motor 61 can be achieved by allowing a predetermined condition such as an increase in the current amplitude Ai.

Similar to the voltage applied to the inverter circuit 85, in the present embodiment, when the motor rotation speed fluctuates, the range of the motor torque T that can be output by the motor 61 and the range of the current vector i supplied to the motor 61 change. For example, it is assumed that the command current amplitude Ai* and the command current phase θi* for satisfying the command torque T* are achieved when the motor rotation speed is a normal rotation speed in normal times. Meanwhile, when the motor rotation speed is higher than the normal rotation speed, there is a concern that the command current amplitude Ai* and the command current phase θi* cannot be achieved.

Meanwhile, in the present embodiment, the current phase θi is adjusted via the current limit line Ui according to the motor rotation speed such that the motor torque T becomes the command torque T*. For example, when the motor rotation speed is higher than the normal rotation speed, the current phase θi is adjusted by reducing the radius of the current limit line Ui. In this case, the motor 61 is driven such that the motor torque T becomes the command torque T* by allowing a condition that the current amplitude Ai increases as compared with the case where the motor rotation speed is the normal rotation speed. In this way, even when the motor rotation speed changes, the command torque T* for the motor 61 can be achieved by allowing a predetermined condition such as the increase in the current amplitude Ai.

According to the present embodiment, when the MTPA point Pm having the MTPA current phase θim is on the inner side of the current limit line Ui, the inverter control unit 81 sets the MTPA current phase θim as the command current phase θi. In the configuration, the current amplitude Ai can be minimized in the range in which the motor torque T becomes the command torque T*. In this way, when the MTPA point Pm is on the inner side of the current limit line Ui, the energy consumption for the command torque T* can be minimized.

According to the present embodiment, when the MTPA point Pm is not on the inner side of the current limit line Ui, the inverter control unit 81 sets the achievement current phase θin at the torque achievement point Pn as the command current phase θi. At the torque achievement point Pn, if the current amplitude Ai is allowed to be larger than that at the MTPA point Pm, the current phase θi is adjusted such that the motor torque T becomes the command torque T*. In this way, even when the MTPA point Pm is not on the inner side of the current limit line Ui, the command torque T* can be achieved. Therefore, insufficiency of the motor torque T for the propulsion of the eVTOL 10 can be avoided.

In the present embodiment, when the MTPA point Pm is not on the inner side of the current limit line Ui, the current vector i is changed from the MTPA point Pm to the torque achievement point Pn. In this case, the inverter control unit 81 calculates the d-axis command current Id* and the q-axis command current Iq* such that the amount of change from the d-axis MTPA current Idm to the d-axis achievement current Idn is larger than the amount of change from the q-axis MTPA current Iqm to the q-axis achievement current Iqn. That is, the inverter control unit 81 calculates the command current phase θi such that the d-axis component of the current vector i changes more than the q-axis component. Therefore, even when the MTPA point Pm is not on the inner side of the current limit line Ui, by adjusting the d-axis component of the current vector i preferentially over the q-axis component, the insufficiency of the motor torque T can be restricted.

In the dq coordinate system, the range of the current that can be output by the inverter circuit 85 is indicated by a circle with the current limit line Ui centered on the limit center point PL on the d-axis. Changing the range that the inverter circuit 85 can output means changing the radius of the current limit line Ui or changing a position of the limit center point PL. In the dq coordinate system, when the iso-torque line LT is drawn in addition to the current limit line Ui, the intersection point of the current limit line Ui and the iso-torque line LT is the torque achievement point Pn. Regarding the change in the position of the torque achievement point Pn with respect to the change in the radius of the current limit line Ui, an amount of change in the d-axis direction is larger than an amount of change in the q-axis direction. Therefore, when the range that the inverter circuit 85 can output changes due to an influence of a voltage decrease of the battery 31 or the like, the current phase θi can be appropriately adjusted from a viewpoint of avoiding the insufficiency of the motor torque T, by preferentially adjusting the d-axis component of the current vector i over the q-axis component.

According to the present embodiment, when the torque achievement point Pn is not on the inner side of the amplitude upper limit line UAi, the inverter control unit 81 adjusts the current phase θi such that the motor torque T is smaller than the command torque T*. In this case, the inverter control unit 81 sets the reduction current phase θio at the torque reduction point Po to the command current phase θi*. At the torque reduction point Po, if the motor torque T is allowed to be smaller than the command torque T* and the current amplitude Ai is allowed to be smaller than the command current amplitude Ai*, the current phase θi is adjusted to increase the motor torque T as much as possible. In this way, when the torque achievement point Pn is not on the inner side of the amplitude upper limit line UAi, an amount of insufficiency of the motor torque T can be reduced as much as possible.

According to the present embodiment, when no EPU abnormality occurs, the inverter control unit 81 adjusts the current phase θi such that the current phase θi becomes the normal-time phase. In this case, the efficiency of the motor 61 can be improved by adjusting the current phase θi. On the other hand, when the EPU abnormality occurs, the inverter control unit 81 adjusts the current phase θi such that the current phase θi becomes the abnormality-time phase. In this case, the inverter control unit 81 can appropriately adjust the current phase θi according to an EPU abnormality state by setting the abnormality-time phase to a phase different from the normal-time phase, or the like.

For example, even if the second inverter device 802 is stopped due to the occurrence of the EPU abnormality, the output of the first inverter device 801 can compensate for an amount of stopped output of the second inverter device 802 to avoid the torque output by one propulsion device 15 from being insufficient. When the command torque T* for the first inverter device 801 is changed due to the occurrence of the EPU abnormality, the command current phase θi* is changed according to the change in the command torque T* in the first inverter device 801, so that an optimum current phase θi can be obtained. In this way, one propulsion device 15 includes multiple inverter devices 80, and thus redundancy of the eVTOL 10 can be enhanced.

According to the present embodiment, the current phase θi is the phase of the current vector i with respect to the magnetic pole of the motor rotor 63. Therefore, a configuration in which the motor torque T increases or decreases by adjusting the current phase θi can be provided. That is, a configuration in which the efficiency of the motor 61 is improved by adjusting the current phase θi can be provided.

In the present embodiment, the moving object propelled by the propulsion device 15 is the eVTOL 10. Increasing the efficiency of the motor 61 by adjusting the current phase θi is effective in increasing flight safety of the eVTOL 10. In an aircraft such as the eVTOL 10, the propulsion device 15 is required to be lightweight, and safety of the propulsion device 15 is required to be high. In the propulsion device 15, the achievement of the minimum current by adjusting the current phase θi can obtain effects such as improvement in electric power efficiency and restriction in heat generation, and is also effective in terms of weight and safety.

In the present embodiment, by increasing the efficiency of the motor 61 by adjusting the current phase θi, heat generation of the motor 61 and heat generation of the inverter circuit 85 can be restricted. That is, heat generation of the propulsion device 15 is significantly restricted. Therefore, even if a cooling effect for the propulsion device 15 obtained by air cooling is lower than, for example, a cooling effect obtained by liquid cooling, by restricting the heat generation of the propulsion device 15 by optimizing the current phase θi, the temperature of the propulsion device 15 can be prevented from becoming excessively high. Therefore, an increase in the temperature of the propulsion device 15 can be restricted while providing the propulsion device 15 with an advantage of an air-cooling type, in which the propulsion device 15 can be light-weighted.

In the eVTOL 10 in which the propulsion device 15 of a liquid-cooling type is applied, a liquid for cooling and a liquid-cooling motor for circulating the liquid are mounted on the eVTOL 10 or the propulsion device 15. Therefore, the weight of the eVTOL 10 tends to increase by an amount of the liquid for cooling and the liquid-cooling motor.

Since the eVTOL 10 is a multicopter, even if a part of the propellers 20 stops due to the occurrence of the abnormality of the eVTOL 10, the flight of the eVTOL 10 can be continued by the remaining propellers 20. However, since the number of propellers 20 that can be driven decreases as a part of the propellers 20 are stopped, the output required for the propellers 20 that can be driven changes. Therefore, the optimum current phase θi changes for the inverter control unit 81 that drives the propeller 20 that can be driven.

Meanwhile, in the present embodiment, when other propellers 20 are stopped due to the propulsion abnormality, the current phase θi is adjusted in response to the stop of other propellers 20 by recalculating the command torque T*. Therefore, the inverter control unit 81 can increase the output torque of the motor 61 to compensate for an amount of the output corresponding to the stop of other propellers 20.

### <Second Embodiment>

In the first embodiment described above, when the inverter control unit 81 cannot perform the MTPA control, the inverter control unit 81 changes the d-axis MTPA current Idm to the d-axis command current Id* and changes the q-axis MTPA current Iqm to the q-axis command current Iq*. Meanwhile, in a second embodiment, when the inverter control unit 81 cannot perform the MTPA control, the inverter control unit 81 changes the d-axis MTPA current Idm to the d-axis command current Id*, but does not change the q-axis MTPA current Iqm to the q-axis command current Iq*. Configurations, operations, and effects not particularly described in the second embodiment are the same as those in the first embodiment described above. In the second embodiment, differences from the first embodiment will be mainly described.

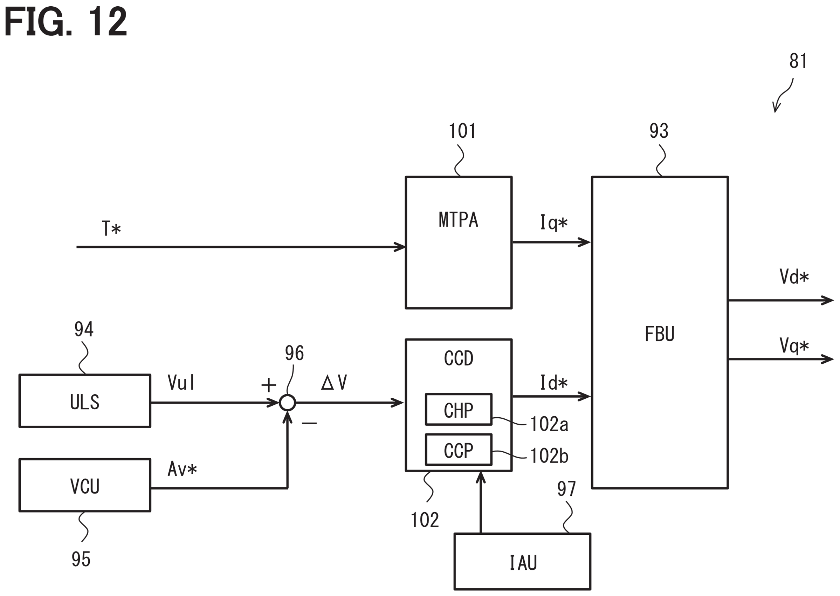

As shown in FIG. 12, the inverter control unit 81 includes an MTPA calculation unit 101 and a current command unit 102 as functional blocks. Similar to the MTPA calculation unit 91 of the first embodiment, the MTPA calculation unit 101 calculates the MTPA currents Idm, Iqm according to the command torque T*. The MTPA calculation unit 101 calculates the MTPA currents Idm, Iqm from the command torque T* using MTPA information such as the MTPA line Lm.

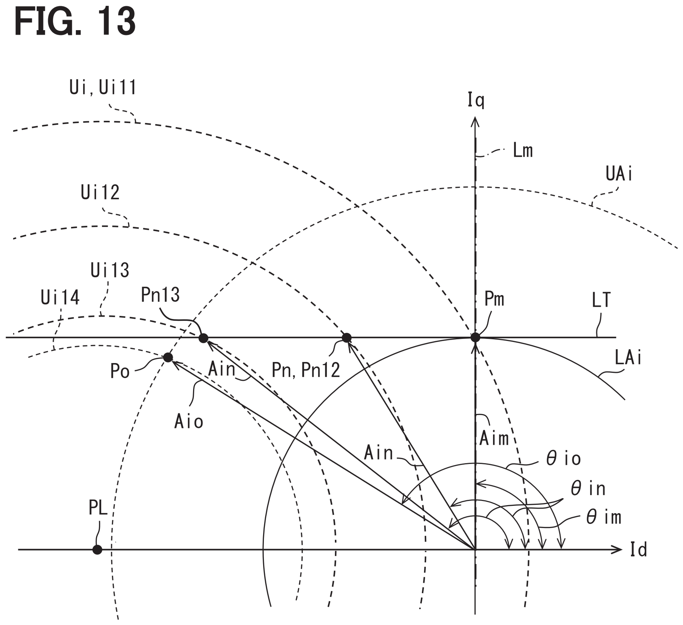

In the MTPA information used by the MTPA calculation unit 101, while the d-axis MTPA current Idm increases or decreases together with the motor torque T, the q-axis MTPA current Iqm hardly increases or decreases. As shown in FIG. 13, the MTPA line Lm used by the MTPA calculation unit 101 extends substantially parallel to the d-axis. For example, the MTPA line Lm is located at a position overlapping the q-axis. In a predetermined MTPA line Lm, while the d-axis MTPA current Idm changes according to the motor torque T, the q-axis MTPA current Iqm is maintained at a predetermined value regardless of the motor torque T. In the MTPA line Lm of the present embodiment, similar to the MTPA line Lm of the first embodiment, both the MTPA current amplitude Aim and the MTPA current phase θim change according to the motor torque T.

In the present embodiment, the iso-torque line LT extends substantially parallel to the d-axis. That is, the iso-torque line LT of the present embodiment extends in a direction orthogonal to the MTPA line Lm. The larger the motor torque T is on the iso-torque line LT, the larger the motor torque T is on the negative side of the d-axis.

In the present embodiment, magnets are provided on the surface of the rotor. For example, the motor 61 is an SPM motor. In the SPM motor, the iso-torque line LT tends to have a torque characteristic of extending parallel to the d-axis. Further, the SPM motor tends to have an MTPA characteristic in which the MTPA line Lm extends parallel to the q-axis.

Similar to the first embodiment, the MTPA point Pm is located at a position where the MTPA line Lm and the iso-torque line LT intersect. Similar to the first embodiment, the MTPA point Pm is a point in contact with the current amplitude line LAi. For example, when the MTPA point Pm is on the q-axis as shown in FIG. 13, the MTPA calculation unit 101 calculates magnitude of the q-axis current Iq as the q-axis MTPA current Iqm. In this case, the MTPA calculation unit 101 calculates the d-axis MTPA current Idm as zero.

Returning to FIG. 12, the MTPA calculation unit 101 calculates the q-axis command current Iq*. The MTPA calculation unit 101 sets the q-axis command current Iq* to the same value as the q-axis MTPA current Iqm. For example, the MTPA calculation unit 101 substitutes the q-axis MTPA current Iqm for the q-axis command current Iq*.

The current command unit 102 calculates the d-axis command current Id*. The current command unit 102 includes a command holding unit 102a and a command changing unit 102b. The command holding unit 102a sets the d-axis command current Id* to the same value as the d-axis MTPA current Idm. For example, the command holding unit 102a substitutes the d-axis MTPA current Idm for the d-axis command current Id*. The command changing unit 102b sets the d-axis command current Id* to a value different from the d-axis MTPA current Idm. The command changing unit 102b calculates the d-axis command current Id* using the command torque T* and the eVTOL 10 information. The current command unit 102 acquires the eVTOL information from the voltage upper limit unit 94, the voltage command unit 95, the voltage difference unit 96, the change information unit 97, and the like.

The command torque T* is also input to the current command unit 102 in addition to the MTPA calculation unit 101. The d-axis MTPA current Idm is input from the MTPA calculation unit 101 to the current command unit 102. In FIG. 12, the MTPA calculation unit 101 is illustrated as MTPA, the current command unit 102 is illustrated as CCD, the command holding unit 102a is illustrated as CHP, and the command changing unit 102b is illustrated as CCP.

The MTPA calculation unit 101 outputs the q-axis command current Iq* to the current control unit 93. The current command unit 102 outputs the d-axis command current Id* to the current control unit 93. The current control unit 93 performs the current control using the q-axis command current Iq* received from the MTPA calculation unit 101 and the d-axis command current Id* received from the current command unit 102.

Similar to the first embodiment, the inverter control unit 81 performs the processing in steps S101 to S114 in the propulsion control process shown in FIG. 7. For example, in step S104, the inverter control unit 81 calculates the MTPA currents Idm, Iqm by the MTPA calculation unit 101.

For example, in FIG. 13, when the current limit line Ui is a current limit line Ui11, the inverter control unit 81 determines in step S106 that the MTPA point Pm is on the inner side of the current limit line Ui. In this case, the inverter control unit 81 proceeds to step S107, and calculates the command currents Id*, Iq* by the command holding unit 102a.

For example, in FIG. 13, when the current limit line Ui is a current limit line Ui12 or a current limit line Ui13, the inverter control unit 81 determines that the MTPA point Pm is not on the inner side of the current limit line Ui and torque achievement points Pn12, Pn13 are on the inner side of the amplitude upper limit line UAi. In this case, the inverter control unit 81 calculates the command currents Id*, Iq* by the command changing unit 102b in steps S109 and S110. In step S109, as in the first embodiment, the inverter control unit 81 calculates the d-axis achievement current Idn, and calculates the q-axis achievement current Iqn by substituting the q-axis MTPA current Iqm for the q-axis achievement current Iqn. As position adjustment of the torque achievement point Pn with respect to the current limit line Ui, the inverter control unit 81 adjusts the d-axis achievement current Idn with respect to the d-axis MTPA current Idm, but does not adjust the q-axis achievement current Iqn with respect to the q-axis MTPA current Iqm.

Similar to the first embodiment, the inverter control unit 81 performs the command changing processing in step S110. The inverter control unit 81 may substitute the d-axis MTPA current Idm for the d-axis command current Id* in step S110 without calculating the d-axis achievement current Idn in step S109.

For example, in FIG. 13, when the current limit line Ui is a current limit line Ui14, the inverter control unit 81 determines that the MTPA point Pm is not on the inner side of the current limit line Ui and the torque achievement point Pn is not present on the outer side of the current limit line Ui. In this case, the inverter control unit 81 calculates the command currents Id*, Iq* by the command changing unit 102b in steps S112 and S113. Similar to the first embodiment, the inverter control unit 81 acquires the torque reduction point Po by calculating the reduction currents Ido, Iqo in step S112.

### <Third Embodiment>

In a third embodiment, when the inverter control unit 81 cannot perform the MTPA control, the current phase θi is adjusted according to the flight mode of the eVTOL 10. Configurations, operations, and effects not particularly described in the third embodiment are the same as those in the first embodiment. In the third embodiment, differences from the first embodiment will be mainly described.

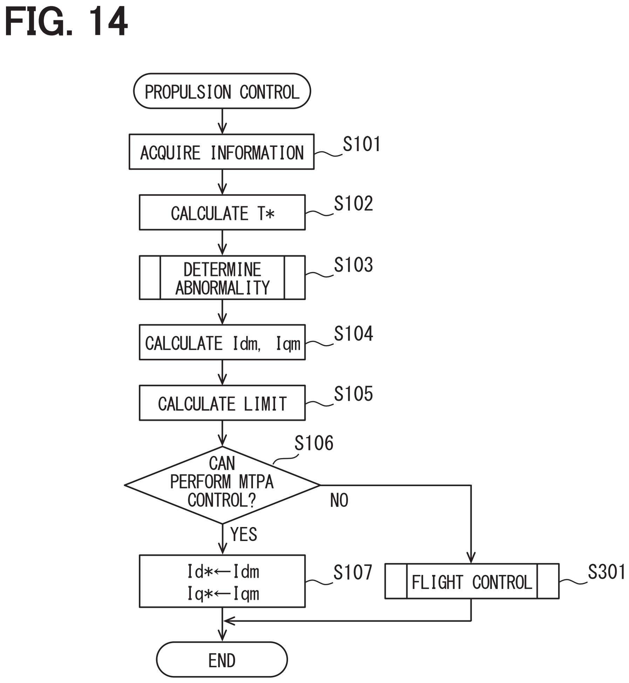

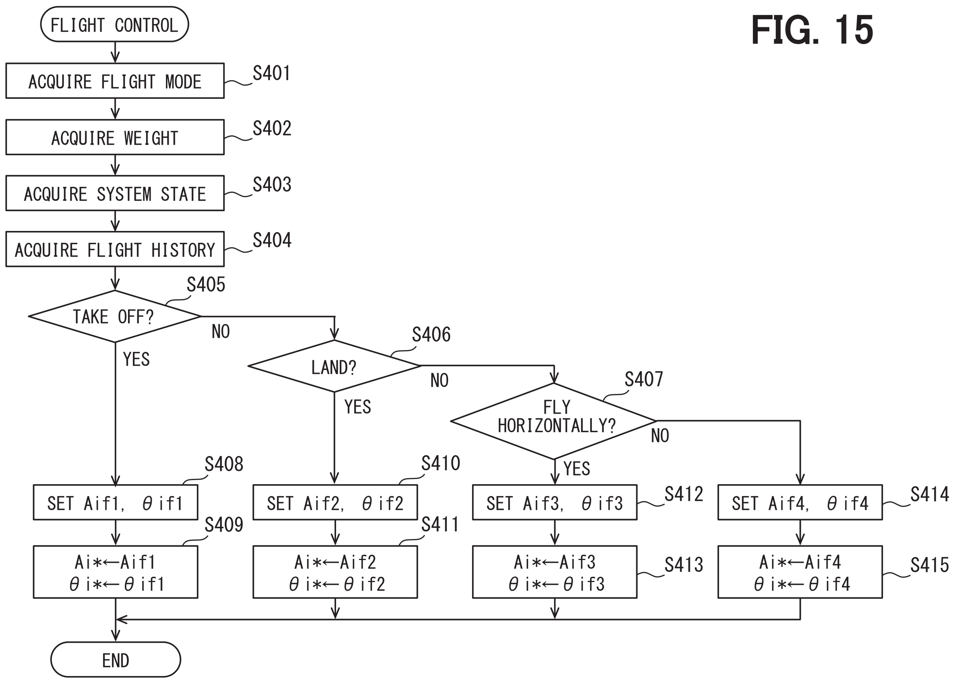

In the present embodiment, the propulsion control process will be described with reference to a flowchart shown in FIG. 14. In FIG. 14, the inverter control unit 81 performs the processing in steps S101 to S107 as in the first embodiment. When the inverter control unit 81 cannot perform the MTPA control in step S106, the inverter control unit 81 proceeds to step S301 and performs a flight control process. The flight control process will be described with reference to a flowchart shown in FIG. 15.

As shown in FIG. 15, the inverter control unit 81 acquires the flight mode in step S401. For example, the inverter control unit 81 acquires the flight information including the flight mode.

In step S402, the inverter control unit 81 acquires the weight of the eVTOL 10. The inverter control unit 81 acquires weight information on the weight of the eVTOL 10. For example, the weight of the eVTOL 10 includes a reference weight and an additional weight. The reference weight is a weight obtained by subtracting the additional weight from a total weight of the eVTOL 10. Examples of the reference weight include the weight of the airframe 11. The additional weight is a weight that increases or decreases in the total weight of the eVTOL 10. Examples of the additional weight include the weights of the occupants, the load, and luggage.

In step S403, the inverter control unit 81 acquires a state of the propulsion system 30. The inverter control unit 81 acquires system information on the state of the propulsion system 30. The system information includes the state of charge and the temperature of the battery 31, the temperature of the motor device 60, the temperature of the inverter device 80, and the like. Examples of the temperature of the inverter device 80 include a temperature of the inverter circuit 85, a temperature of the inverter control unit 81, and a temperature of the inverter housing 90.

In step S404, the inverter control unit 81 acquires the flight history. For example, the inverter control unit 81 acquires the flight information including the flight history.

In steps S405 to S415, the inverter control unit 81 adjusts the current phase θi according to the flight state of the eVTOL 10 and the state of the eVTOL 10. A function of performing the processing in steps S405 to S415 in the inverter control unit 81 corresponds to a flight adjustment unit, a moving adjustment unit, and the phase adjustment unit.

In step S405, the inverter control unit 81 determines whether the eVTOL 10 takes off. Examples of the take-off of the eVTOL 10 include the vertical take-off. Examples of the case where the eVTOL 10 takes off include a case where the eVTOL 10 is preparing for the take-off and a case where the eVTOL 10 is taking off.

When the eVTOL 10 takes off, the inverter control unit 81 proceeds to step S408 and calculates a take-off current amplitude Aif1 and a take-off current phase θif1. The take-off current amplitude Aif1 and the take-off current phase θif1 are a current amplitude Ai and a current phase θi necessary for the take-off of the eVTOL 10. The take-off current amplitude Aif1 and the take-off current phase θif1 are values determined in advance by a test or the like, and are stored in the memory 83 or the like.

For the inverter control unit 81, calculating the take-off current amplitude Aif1 and the take-off current phase θif1 also means calculating a d-axis take-off current Idf1 and a q-axis take-off current Iqf1. The d-axis take-off current Idf1 and the q-axis take-off current Iqf1 are d-axis currents Id necessary for the eVTOL 10 to take off.

In step S409, the inverter control unit 81 calculates the command current amplitude Ai* and the command current phase θi* using the take-off current amplitude Aif1 and the take-off current phase θif1. In other words, the inverter control unit 81 calculates the command currents Id*, Iq* using the take-off currents Idf1 and Iqf1. The inverter control unit 81 performs the motor control using the take-off current amplitude Aif1 and the take-off current phase θif1 based on the command current amplitude Ai* and the command current phase θi*. In other words, the inverter control unit 81 performs the motor control using the take-off currents Idf1 and Iqf1 based on the command currents Id*, Iq*.

The inverter control unit 81 adjusts the current phase θi according to the take-off of the eVTOL 10 in steps S408 and S409. A function of performing the processing in steps S408 and S409 in the inverter control unit 81 corresponds to a take-off adjustment unit.

In step S409, the inverter control unit 81 calculates the command current amplitude Ai* and the command current phase θi* from the take-off current amplitude Aif1 and the take-off current phase θif1 using at least one of the weight information, the system information, and the flight information. In steps S408 and S409, the inverter control unit 81 adjusts the current phase θi according to at least one of the weight of the eVTOL 10, the flight history of the eVTOL 10, the state of charge of the battery 31, and the temperature of the motor 61. A function of performing the processing in steps S408 and S409 in the inverter control unit 81 corresponds to a specific adjustment unit.

When the eVTOL 10 does not take off, the inverter control unit 81 proceeds to step S406 and determines whether the eVTOL 10 lands. Examples of the landing of the eVTOL 10 include the vertical landing. Examples of the case where the eVTOL 10 lands include a case where the eVTOL 10 is preparing for the landing and a case where the eVTOL 10 is landing.

When the eVTOL 10 lands, the inverter control unit 81 proceeds to step S410 and calculates a landing current amplitude Aif2 and a landing current phase θif2. The landing current amplitude Aif2 and the landing current phase θif2 are a current amplitude Ai and a current phase θi necessary for the landing of the eVTOL 10. The landing current amplitude Aif2 and the landing current phase θif2 are values determined in advance by a test or the like, and are stored in the memory 83 or the like.

For the inverter control unit 81, calculating the landing current amplitude Aif2 and the landing current phase θif2 also means calculating a d-axis landing current Idf2 and a q-axis landing current Iqf2. The d-axis landing current Idf2 and the q-axis landing current Iqf2 are d-axis currents Id necessary for the landing of the eVTOL 10.

In step S411, the inverter control unit 81 calculates the command current amplitude Ai* and the command current phase θi* using the landing current amplitude Aif2 and the landing current phase θif2. In other words, the inverter control unit 81 calculates the command currents Id*, Iq* using the landing currents Idf2 and Iqf2. The inverter control unit 81 performs the motor control using the landing current amplitude Aif2 and the landing current phase θif2 based on the command current amplitude Ai* and the command current phase θi*. In other words, the inverter control unit 81 performs the motor control using the landing currents Idf2 and Iqf2 based on the command currents Id*, Iq*.

The inverter control unit 81 adjusts the current phase θi according to the landing of the eVTOL 10 in steps S410 and S411. A function of performing the processing in steps S410 and S411 in the inverter control unit 81 corresponds to a landing adjustment unit.

In step S411, the inverter control unit 81 calculates the command current amplitude Ai* and the command current phase θi* from the landing current amplitude Aif2 and the landing current phase θif2 using at least one of the weight information, the system information, and the flight information. For example, the inverter control unit 81 corrects the landing current amplitude Aif2 and the landing current phase θif2 using at least one of the weight information, the system information, and the flight information. By steps S410 and S411, the inverter control unit 81 adjusts the current phase θi according to at least one of the weight of the eVTOL 10, the flight history of the eVTOL 10, the state of charge of the battery 31, and the temperature of the motor 61. The function of performing the processing in steps S410 and S411 in the inverter control unit 81 corresponds to the specific adjustment unit.

When the eVTOL 10 does not take off or land, the inverter control unit 81 proceeds to step S407 and determines whether the eVTOL 10 flies horizontally. Examples of the case where the eVTOL 10 flies horizontally include a case where the eVTOL 10 is preparing for the horizontal flight and a case where the eVTOL 10 is flying horizontally.

When the eVTOL 10 flies horizontally, the inverter control unit 81 proceeds to step S412 and calculates a horizontal-flight current amplitude Aif3 and a horizontal-flight current phase θif3. The horizontal-flight current amplitude Aif3 and the horizontal-flight current phase θif3 are a current amplitude Ai and a current phase θi necessary for the horizontal flight of the eVTOL 10. The horizontal-flight current amplitude Aif3 and the horizontal-flight current phase θif3 are values determined in advance by a test or the like, and are stored in the memory 83 or the like.

For the inverter control unit 81, calculating the horizontal-flight current amplitude Aif3 and the horizontal-flight current phase θif3 also means calculating a d-axis horizontal-flight current Idf3 and a q-axis horizontal-flight current Iqf3. The d-axis horizontal-flight current Idf3 and the q-axis horizontal-flight current Iqf3 are d-axis currents Id necessary for the horizontal flight of the eVTOL 10.

In step S413, the inverter control unit 81 calculates the command current amplitude Ai* and the command current phase θi* using the horizontal-flight current amplitude Aif3 and the horizontal-flight current phase θif3. In other words, the inverter control unit 81 calculates the command currents Id*, Iq* using the horizontal-flight currents Idf3, Iqf3. The inverter control unit 81 performs the motor control using the horizontal-flight current amplitude Aif3 and the horizontal-flight current phase θif3 based on the command current amplitude Ai* and the command current phase θi*. In other words, the inverter control unit 81 performs the motor control using the horizontal-flight currents Idf3, Iqf3 based on the command currents Id*, Iq*.

The inverter control unit 81 adjusts the current phase θi according to the horizontal flight of the eVTOL 10 in steps S412 and S413. A function of performing the processing in steps S412 and S413 in the inverter control unit 81 corresponds to a horizontal-flight adjustment unit.

In step S413, the inverter control unit 81 calculates the command current amplitude Ai* and the command current phase θi* from the horizontal-flight current amplitude Aif3 and the horizontal-flight current phase θif3 using at least one of the weight information, the system information, and the flight information. For example, the inverter control unit 81 corrects the horizontal-flight current amplitude Aif3 and the horizontal-flight current phase θif3 using at least one of the weight information, the system information, and the flight information. In steps S412 and S413, the inverter control unit 81 adjusts the current phase θi according to at least one of the weight of the eVTOL 10, the flight history of the eVTOL 10, the state of charge of the battery 31, and the temperature of the motor 61. A function of performing the processing in steps S412 and S413 in the inverter control unit 81 corresponds to the specific adjustment unit.

When the eVTOL 10 does not take off, land, or fly horizontally, the inverter control unit 81 determines that the eVTOL 10 is in the hovering flight. Examples of the case where the eVTOL 10 is in the hovering flight include a case where the eVTOL 10 is preparing for the hovering flight and a case where the eVTOL 10 is hovering.

When the eVTOL 10 is in the hovering flight, the inverter control unit 81 proceeds to step S414 and calculates a hovering current amplitude Aif4 and a hovering current phase θif4. The hovering current amplitude Aif4 and the hovering current phase θif4 are a current amplitude Ai and a current phase θi necessary for landing the eVTOL 10. The hovering current amplitude Aif4 and the hovering current phase θif4 are values determined in advance by a test or the like, and are stored in the memory 83 or the like.

For the inverter control unit 81, calculating the hovering current amplitude Aif4 and the hovering current phase θif4 also means calculating a d-axis hovering current Idf4 and a q-axis hovering current Iqf4. The d-axis hovering current Idf4 and the q-axis hovering current Iqf4 are d-axis currents Id necessary for landing the eVTOL 10.

In step S415, the inverter control unit 81 calculates the command current amplitude Ai* and the command current phase θi* using the hovering current amplitude Aif4 and the hovering current phase θif4. In other words, the inverter control unit 81 calculates the command currents Id*, Iq* using the hovering currents Idf4, Iqf4. The inverter control unit 81 performs the motor control using the hovering current amplitude Aif4 and the hovering current phase θif4 based on the command current amplitude Ai* and the command current phase θi*. In other words, the inverter control unit 81 performs the motor control using the hovering currents Idf4, Iqf4 based on the command currents Id*, Iq*.

The inverter control unit 81 adjusts the current phase θi according to the landing of the eVTOL 10 in steps S414 and S415. A function of performing the processing in steps S414 and S415 in the inverter control unit 81 corresponds to the landing adjustment unit.

In step S415, the inverter control unit 81 calculates the command current amplitude Ai* and the command current phase θi* from the hovering current amplitude Aif4 and the hovering current phase θif4 using at least one of the weight information, the system information, and the flight information. For example, the inverter control unit 81 corrects the hovering current amplitude Aif4 and the hovering current phase θif4 using at least one of the weight information, the system information, and the flight information. In steps S414 and S415, the inverter control unit 81 adjusts the current phase θi according to at least one of the weight of the eVTOL 10, the flight history of the eVTOL 10, the state of charge of the battery 31, and the temperature of the motor 61. A function of performing the processing in steps S414 and S415 in the inverter control unit 81 corresponds to the specific adjustment unit.

Returning to FIG. 14, the inverter control unit 81 adjusts the current phase θi according to the flight state of the eVTOL 10 by at least a part of the flight control process in step S301. The inverter control unit 81 adjusts the current phase θi according to the abnormal state of the eVTOL 10 by the abnormality determination process in step S103 or the like. The inverter control unit 81 adjusts the current phase θi according to the control state of the motor 61 by the processing in steps S102, S104, S107, or the like.

According to the present embodiment, the inverter control unit 81 adjusts the current phase θi according to the control state of the motor 61, the abnormal state of the eVTOL 10, and the flight state of the eVTOL 10. In the configuration, the current phase θi can be adjusted to maximize the efficiency of the motor 61 in any of a case where the control state of the motor 61 changes, a case where the abnormality of the eVTOL 10 occurs, and a case where the flight state of the eVTOL 10 changes. Therefore, similar to the first embodiment, even when the state of the eVTOL 10 or the motor 61 changes, the decrease in the efficiency of the motor 61 can be restricted by adjusting the current phase θi.

In the eVTOL 10, it is considered that the output of the propulsion device 15 necessary for the eVTOL 10 to fly tends to be a value determined to some extent according to the flight state. That is, it is considered that the current phase θi necessary for the eVTOL 10 to fly is likely to be a value determined to some extent according to the flight state.

Meanwhile, according to the present embodiment, the inverter control unit 81 adjusts the current phase θi according to the flight state of the eVTOL 10. In the configuration, the inverter control unit 81 does not need to calculate the command current phase θi* using the command torque T* each time. Therefore, a processing load of the inverter control unit 81 can be reduced when the eVTOL 10 flies. Since the current phase θi is adjusted according to the flight state of the eVTOL 10, it is possible to prevent the output torque of the motor 61 from being excessive or insufficient for each flight state. Therefore, the safety of the eVTOL 10 can be increased while reducing the processing load of the inverter control unit 81.

According to the present embodiment, the inverter control unit 81 adjusts the current phase θi according to at least one of the weight of the eVTOL 10, the flight history of the eVTOL 10, the state of charge of the battery 31, and the temperature of the motor 61. In the configuration, the motor torque T can be controlled via the current phase θi according to the weight and flight history of the eVTOL 10, the state of charge of the battery 31, and the temperature of the motor 61. Therefore, it is possible to prevent the motor torque T from being excessive or insufficient with respect to the weight and the flight history of the eVTOL 10, the state of charge of the battery 31, and the temperature of the motor 61.

In the eVTOL 10, states of the airframe 11 and the propulsion system 30 such as the state of charge of the battery 31, the temperature of the battery 31, the temperature of the motor device 60, and the temperature of the inverter device 80 are significantly different between immediately after start of the flight such as immediately after start of the take-off and immediately before end of the flight such as immediately before completion of the landing. For example, when the state of charge of the battery 31 decreases, the range of the current that can be output by the inverter circuit 85 tends to be narrowed. When the temperature of the battery 31, the motor device 60, or the inverter device 80 deviates from an appropriate temperature range to a high temperature side or a low temperature side, the range that can be output by the inverter circuit 85 tends to be narrowed. In the motor 61, a state of the magnetic flux tends to change depending on the temperature of the magnet. In the eVTOL 10, the state of charge of the battery 31 tends to decrease by continuing the flight. In the motor device 60 or the inverter device 80, since heat is generated due to the driving, the temperature of the motor 61 or the inverter circuit 85 is more likely to increase as compared with that immediately after the start of the flight of the eVTOL 10.

Meanwhile, in the present embodiment, the current phase θi is adjusted according to the state of charge of the battery 31 and the temperature of the motor 61. Therefore, when the eVTOL 10 flies, the current phase θi can be appropriately adjusted according to a degree of decrease in the state of charge of the battery 31 and a degree of increase in the temperature of the motor 61. In the present embodiment, the current phase θi is adjusted according to the flight time of the eVTOL 10 and the driving history of the motor 61. Therefore, when the eVTOL 10 flies, the current phase θi can be appropriately adjusted according to the state of charge of the battery 31 that decreases with the flight, the temperature of the motor 61 that increases with the flight, or the like.

According to the present embodiment, the inverter control unit 81 adjusts the current phase θi according to the flight mode including the take-off, the landing, and the horizontal flight. Therefore, the inverter control unit 81 does not need to individually calculate the command torque T* for each of the take-off, the landing, and the horizontal flight of the eVTOL 10. Therefore, when the eVTOL 10 takes off, lands, or horizontally flies, the processing load of the inverter control unit 81 can be reduced.

In the eVTOL 10, the command torque T* tends to change depending on the state, a flight condition, or the like of the eVTOL 10. Examples of the flight condition include the flight mode, weather, the flight speed, and the additional weight. In particular, in the eVTOL 10 provided with a fixed wing such as the wing 13, the command torque T* is likely to change according to the flight mode of the eVTOL 10.

For example, when the eVTOL 10 takes off vertically, it is necessary to generate a force required for the take-off by rotating all the propellers 20. When the eVTOL 10 takes off vertically, a largest motor torque T is likely to be required in the flight mode. Therefore, the command torque T* required for the eVTOL 10 to take off vertically tends to be larger than the command torque T* required in other flight modes. Even when the take-off of the eVTOL 10 is not the vertical take-off, at the take-off of the eVTOL 10, the command torque T* tends to be larger than in the other flight modes.

When the eVTOL 10 takes off, there is a high possibility that the battery 31 is nearly fully charged for the eVTOL 10 to fly to a destination. Therefore, the range of the current that can be output by the inverter circuit 85 tends to be wide.

When the eVTOL 10 flies horizontally, the motor torque T required for the horizontal flight tends to be smaller than the motor torque T required for the take-off of the eVTOL 10. Therefore, the command torque T* during the horizontal flight tends to be smaller than the command torque T* during the take-off. In particular, in the eVTOL 10 with a fixed wing, the command torque T* during the horizontal flight tends to be smaller than the command torque T* during the take-off. In the eVTOL 10, a force required for the horizontal flight can depend on a buoyancy generated by the fixed wing.

When the eVTOL 10 lands, the motor torque T required for the landing tends to be smaller than the motor torque T required for the take-off of the eVTOL 10. Therefore, the command torque T* during the landing tends to be smaller than the command torque T* during the take-off. When the landing of the eVTOL 10 is vertical landing, the command torque T* during the vertical landing tends to be larger than the command torque T* during the horizontal flight. In this way, the command torque T* during the vertical landing tends to be the second largest after the command torque T* during the take-off in the flight modes. On the other hand, when the landing of the eVTOL 10 is not vertical landing, the command torque T* during the landing tends to be a command torque T* equivalent to the command torque T* during the horizontal flight.

As described above, a difference in the command torque T* is likely to occur among the take-off, the horizontal flight, and the landing of the eVTOL 10. Therefore, as in the present embodiment, by acquiring the command torque T* required during the take-off of the eVTOL 10 by a test or the like and calculating the current phases θif1 to θif4 from the acquisition result, the current phase θi can be adjusted according to the flight mode of the eVTOL 10. In this case, as compared with a configuration in which the current phase θi is adjusted according to the command torque T*, the efficiency of the motor 61 is slightly likely to decrease, but the process for adjusting the current phase θi can be simplified.

In the eVTOL 10, the command torque T* is likely to change according to the weight of the eVTOL 10 in addition to the flight mode. Therefore, by adjusting the current phase θi according to the flight mode and the weight of the eVTOL 10, the efficiency of the motor 61 is less likely to decrease.

### <Fourth Embodiment>

In the first embodiment described above, the EPU 50 includes only one motor device 60, and includes multiple inverter devices 80. Meanwhile, in a fourth embodiment, the EPU 50 includes multiple motor devices 60 and multiple inverter devices 80. Configurations, operations, and effects not particularly described in the fourth embodiment are the same as those in the first embodiment. In the fourth embodiment, differences from the first embodiment will be mainly described.

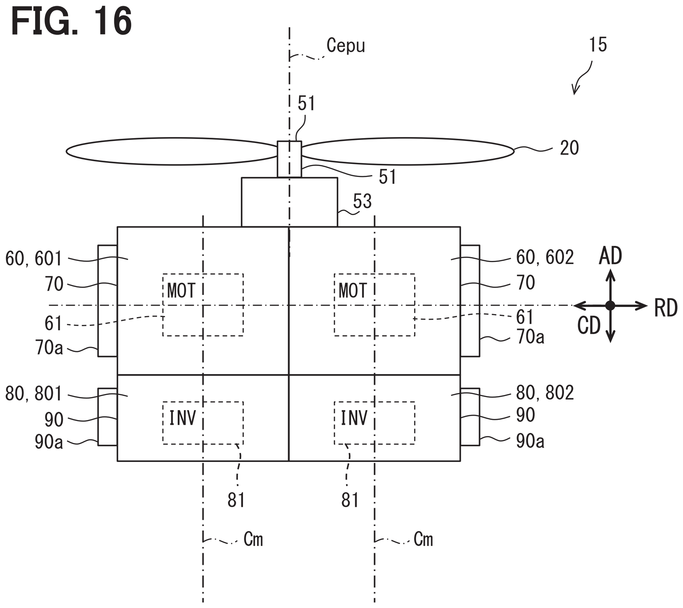

As shown in FIG. 16, the EPU 50 includes a first motor device 601 and a second motor device 602 as the motor devices 60. The first motor device 601 is aligned with the first inverter device 801 in the axial direction AD. The second motor device 602 is aligned with the second inverter device 802 in the axial direction AD. The first motor device 601 and the second motor device 602 are arranged in the radial direction RD. The first inverter device 801 and the second inverter device 802 are arranged in the radial direction RD, unlike the first embodiment.

The motor device 601, 602 and the inverter devices 801, 802 may be arranged in any manner as long as being are included in the propulsion device 15. For example, the first motor device 601 and the second motor device 602 may be arranged in the axial direction AD. The first inverter device 801 and the second inverter device 802 may be arranged in the axial direction AD.

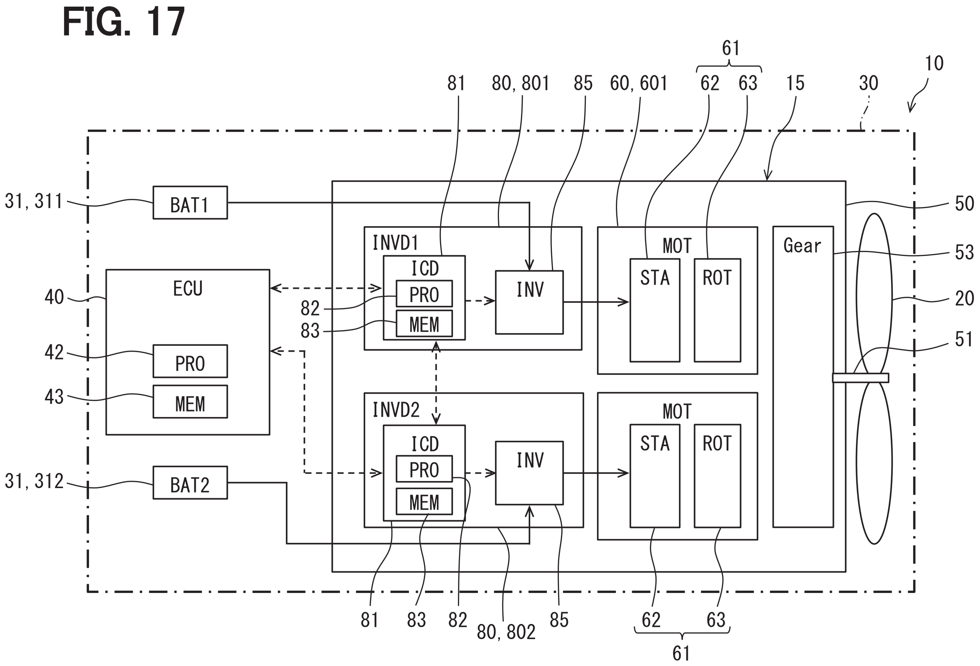

In the present embodiment, in FIG. 17, one inverter device 80 controls one motor device 60. For example, the first inverter device 801 controls the first motor device 601. In the first inverter device 801, the inverter circuit 85 supplies electric power to the motor stator 62 of the first motor device 601. The first inverter device 801 drives the first motor device 601 using the electric power of the first battery 311. The second inverter device 802 controls the second motor device 602. In the second inverter device 802, the inverter circuit 85 supplies electric power to the motor stator 62 of the second motor device 602. The second inverter device 802 drives the second motor device 602 using the electric power of the second battery 312.

The inverter control unit 81 calculates the command torque T* for each of the inverter devices 801, 802 such that the motor device 601, 602 shares the required output for one propulsion device 15. For example, the inverter control unit 81 calculates the command torque T* for the first inverter device 801 such that the motor devices 601, 602 each share 50% of the required output for one propulsion device 15.

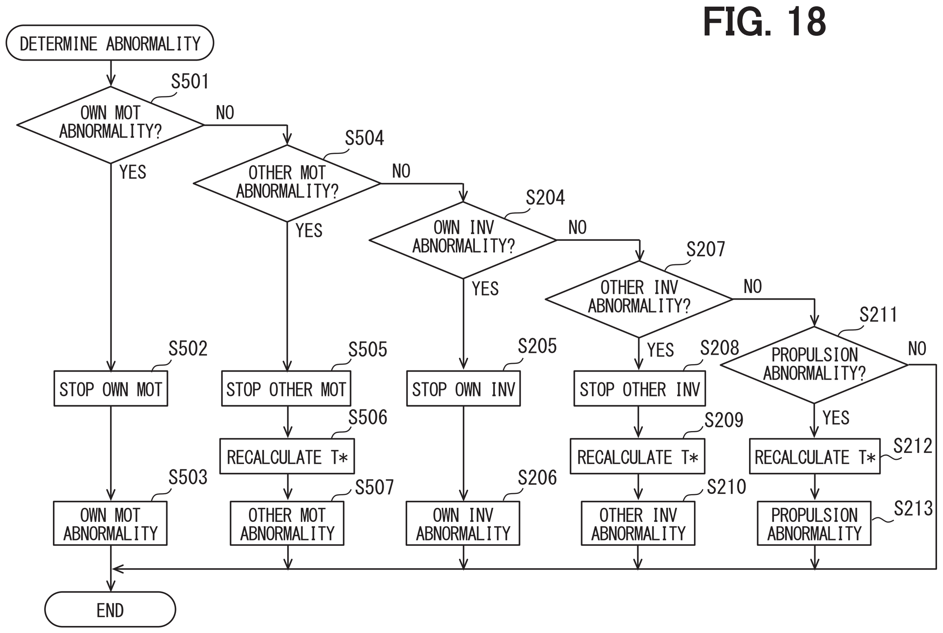

The inverter control unit 81 performs the propulsion control process and the abnormality determination process as in the first embodiment. In the present embodiment, the abnormality determination process will be described with reference to a flowchart of FIG. 18. Here, similar to the first embodiment, the abnormality determination process performed by the first inverter device 801 will be described.

In the present embodiment, regarding the propulsion control process performed by the first inverter device 801, the first motor device 601 may be referred to as an own motor device, and the second motor device 602 may be referred to as the other motor device. In FIG. 18, the first motor device 601 is illustrated as own MOT, and the second motor device 602 is illustrated as the other MOT.

In the second inverter device 802, the propulsion control process is executed similarly to the first inverter device 801 as in the first embodiment. In the propulsion control process performed by the second inverter device 802, the second motor device 602 corresponds to the own motor device, and the first motor device 601 corresponds to the other motor device. In the present embodiment, as in the first embodiment, description of the propulsion control process performed by the second inverter device 802 will be omitted.

As shown in FIG. 18, the inverter control unit 81 performs abnormality determination of the first motor device 601 in step S501. That is, in step S501, the abnormality determination of the own motor device is performed. In the abnormality determination, it is determined whether the abnormality of the first motor device 601 occurs using the eVTOL information. When the abnormality of the first motor device 601 occurs, the inverter control unit 81 proceeds to step S502. The abnormality of the first motor device 601 is included in the EPU abnormality. Examples of the abnormality of the first motor device 601 include the abnormality of the motor 61 and the abnormality of the motor housing 70.

The inverter control unit 81 stops the driving of the first motor device 601 in step S502. That is, in step S502, the driving of the own motor device is stopped. For example, the inverter control unit 81 stops the power supply from the first inverter device 801 to the first motor device 601.

In step S503, the inverter control unit 81 performs the motor abnormality processing for the first motor device 601. That is, in step S503, the motor abnormality processing for the own motor device is performed. In the motor abnormality processing, the occurrence of the abnormality of the first motor device 601, the stop of the driving of the first motor device 601, or the like is notified to the second inverter device 802, the integrated ECU 40, the pilot, or the like.

When no abnormality occurs in the first motor device 601, the inverter control unit 81 proceeds to step S504 and performs abnormality determination of the second motor device 602. That is, in step S504, the abnormality determination of the other motor device is performed. In the abnormality determination, it is determined whether an abnormality of the second motor device 602 occurs using the eVTOL information. When the abnormality of the second motor device 602 occurs, the inverter control unit 81 proceeds to step S505. The abnormality of the second motor device 602 is included in the EPU abnormality. Examples of the abnormality of the second motor device 602 include the abnormality of the motor 61 and the abnormality of the motor housing 70.

The inverter control unit 81 performs processing for stopping the driving of the second motor device 602 in step S505. That is, in step S505, processing for stopping the driving of the other motor device is performed. For example, the inverter control unit 81 outputs a signal for stopping the driving of the second motor device 602 to the second inverter device 802.

In step S506, the inverter control unit 81 recalculates the command torque T* for the first inverter device 801. That is, in step S506, the command torque T* for the own inverter device is recalculated. The inverter control unit 81 calculates the command torque T* for the first inverter device 801 such that the first motor device 601 outputs the entire required output for one propulsion device 15.

In step S507, the inverter control unit 81 performs the motor abnormality processing for the second motor device 602. That is, in step S507, the motor abnormality processing for the other motor device is performed. In the motor abnormality processing, the occurrence of the abnormality of the second motor device 602, the stop of the driving of the second motor device 602, or the like is notified to the integrated ECU 40, the pilot, or the like.

When no abnormality occurs in the second motor device 602, the inverter control unit 81 performs the processing in steps S204 to S213 as in the first embodiment.

When the command torque T* is recalculated in step S506, the inverter control unit 81 adjusts the current phase θi according to a state such as the abnormal state of the eVTOL 10, by the processing in steps S507, S104, S107, S109, S110, S112, and S113. A function of performing the processing in steps S507, S104, S107, S109, S110, S112, and S113 in the inverter control unit 81 corresponds to the abnormality adjustment unit and the phase adjustment unit.

When the command torque T* is recalculated in step S507, the command current phase θi* calculated in steps S104, S107, S109, S110, S112, and S113 corresponds to the abnormality-time phase. In this case, the inverter control unit 81 adjusts the current phase θi such that the current phase θi becomes the abnormality-time phase in steps S504, S104, S107, S109, S110, S112, and S113. A function of performing the processing in steps S504, S104, S107, S109, S110, S112, and S113 in the inverter control unit 81 corresponds to the abnormal-time adjustment unit.

According to the present embodiment, when the second motor device 602 is stopped due to the occurrence of the EPU abnormality, the inverter control unit 81 can compensate for an amount of stopped output of the second motor device 602 with the output torque of the first motor device 601. In this case, the first motor device 601 can prevent the torque output by one propulsion device 15 from being insufficient. When the command torque T* for the first motor device 601 is changed as the second motor device 602 is stopped, the command current phase θi* is changed according to the change in the command torque T* in the first inverter device 801, and thus the optimum current phase θi can be obtained. In this way, since one propulsion device 15 includes multiple motor devices 60, the redundancy of the eVTOL 10 can be enhanced.

### <Fifth Embodiment>

In the first embodiment described above, the EPU 50 includes multiple inverter devices 80 and includes only one motor device 60. Meanwhile, in a fifth embodiment, the EPU 50 includes one motor device 60 and one inverter device 80. Configurations, operations, and effects not particularly described in the fifth embodiment are the same as those of the first embodiment. In the fifth embodiment, differences from the first embodiment will be mainly described.

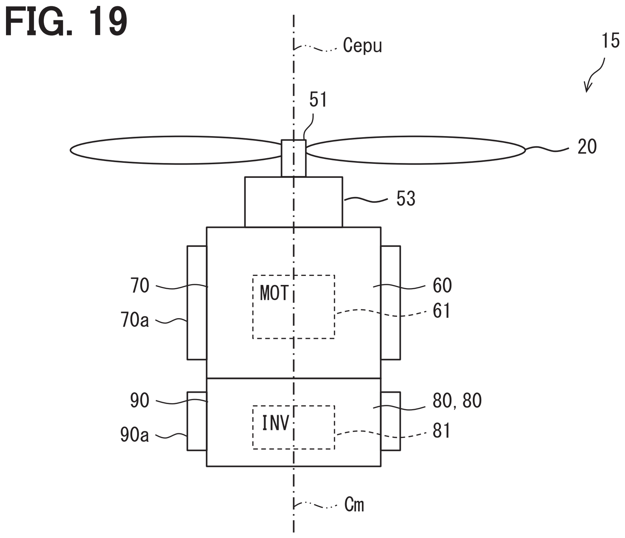

As shown in FIG. 19, in the EPU 50, one motor device 60 and one inverter device 80 are arranged in the axial direction AD. The motor device 60 and the inverter device 80 may be arranged in the radial direction RD.

In the present embodiment, as in the fourth embodiment, one inverter device 80 controls one motor device 60. On the other hand, in one propulsion device 15, when the driving of one of the motor device 60 and the inverter device 80 is stopped due to the occurrence of an abnormality or the like, the rotation of the propeller 20 is stopped. That is, the driving of the propulsion device 15 is stopped. In this case, the eVTOL 10 continues to fly using the remaining propellers 20. In the remaining propulsion devices 15, the required torque for the propeller 20 or the motor 61 is changed as the driving of the one propulsion device 15 is stopped.

### <Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the above embodiments, the inverter control unit 81 may adjust the current phase θi according to at least one of the control state of the motor 61, the abnormal state of the eVTOL 10, and the flight state of the eVTOL 10. The inverter control unit 81 may adjust the current phase θi according to only one of the control state of the motor 61, the abnormal state of the eVTOL 10, and the flight state of the eVTOL 10.

In each of the above embodiments, the inverter control unit 81 may adjust the current phase θi according to at least one of the take-off, the landing, and the horizontal flight. For example, in the third embodiment, the inverter control unit 81 may adjust the current phase θi according to only one of the take-off, the landing, and the horizontal flight. The inverter control unit 81 may adjust the current phase θi according to at least one of the take-off, the landing, the horizontal flight, and the hovering flight.

In each of the above embodiments, the inverter control unit 81 may perform the motor control using the current amplitude Ai and the current phase θi. For example, in the first embodiment, the inverter control unit 81 may calculate the command voltages Vd*, Vq* such that the current amplitude Ai and the current phase θi become the command current amplitude Ai* and the command current phase θi*.

In each of the above embodiments, either the abnormality determination of the motor device 60 or the abnormality determination of the inverter device 80 may be performed first. For example, in the first embodiment described above, the abnormality determination of the motor device 60 may be performed after at least one of the abnormality determination of the first inverter device 801 and the abnormality determination of the second inverter device 802 is performed. In the third embodiment, at least one of the abnormality determination of the first motor device 601 and the abnormality determination of the second motor device 602 may be performed after at least one of the abnormality determination of the first inverter device 801 and the abnormality determination of the second inverter device 802 is performed. For example, the abnormality determination of the second motor device 602 and the abnormality determination of the second inverter device 802 may be performed after the abnormality determination of the first motor device 601 and the abnormality determination of the first inverter device 801 are performed.

In each of the above embodiments, at least one of the inverter control unit 81 and the integrated ECU 40 may perform the propulsion control process. For example, in the first embodiment, the integrated ECU 40 may perform the motor control for each of the first inverter device 801 and the second inverter device 802.

In each of the embodiments described above, at least a part of the programs stored in the memories 43 and 83 may be rewritten through wireless communication such as OTA. The OTA is an abbreviation of over the air.

In each of the embodiments described above, the vertical take-off and landing aircraft on which the integrated ECU 40 is mounted may be an electric-type vertical take-off and landing aircraft in which at least one propeller 20 is driven by at least one EPU 50. For example, one propeller 20 may be driven by multiple EPUs 50, or multiple propellers 20 may be driven by one EPU 50.

In each of the embodiments described above, the flight vehicle on which the EPU 50 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person. The pilot may remotely control the flight vehicle.

In each of the embodiments described above, the moving object on which the EPU 50 is mounted may not be a flight vehicle as long as the moving object is movable by rotation of the rotary body. For example, the moving object may be a vehicle, a ship, a construction machine, or an agricultural machine. For example, when the moving object is a vehicle, a construction machine, or the like, the rotary body is a movement-wheel or the like, and an output shaft portion is an axle or the like. When the moving object is a ship, the rotary body is a propulsion-screw propeller or the like, and the output shaft portion is a propeller shaft or the like.

In each of the embodiments described above, the integrated ECU 40 and the inverter control unit 81 are provided by a control system including at least one computer. The control system includes at least one processor that is hardware. When the processor is referred to as a hardware processor, the hardware processor can be implemented by (i), (ii), or (iii) to be described below.

(i) The hardware processor may be a hardware logic circuit. In this case, the computer is implemented by a digital circuit including many programmed logic units (gate circuits). The digital circuit may include a memory in which at least one of a program and data is stored. The computer may be implemented by an analog circuit. The computer may be implemented by a combination of the digital circuit and the analog circuit.
(ii) The hardware processor may be at least one processor core that executes a program stored in at least one memory. In this case, the computer includes at least one memory and at least one processor core. The processor core is referred to as a CPU, for example. The memory is also referred to as a storage medium. The memory is a non-transitory and tangible storage medium non-temporarily storing "at least one of a program and data" readable by the processor.
(iii) The hardware processor may be a combination of (i) and (ii) described above. (i) and (ii) are provided on different chips or a common chip.

That is, at least one of means and functions provided by the integrated ECU 40 and the inverter control unit 81 can be provided by hardware alone, software alone, or a combination thereof.

### (Disclosure of technical idea)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

A propulsion device (15) is configured to propel a moving object (10). The propulsion device includes: a motor (61) configured to be driven to propel the moving object; a state acquisition unit (S101) configured to acquire a state of the moving object; and a phase adjustment unit (S102, S104, S107, S109, S110, S112, S113, S209, S212, S405 to S415, S506) configured to adjust, according to the state of the moving object acquired by the state acquisition unit, a current phase (θi) of a motor current (i) that flows through the motor.

### (Technical idea 2)

The propulsion device according to technical idea 1, in which the phase adjustment unit includes at least one of a control adjustment unit (S102, S104, S107, S109, S110, S112, S113) configured to adjust the current phase according to a control state of the motor that is the state of the moving object, an abnormality adjustment unit (S104, S107, S109, S110, S112, S113, S209, S212, S506) configured to adjust the current phase according to an abnormal state that is the state of the moving object and includes presence or absence of an abnormality of the moving object, and a moving adjustment unit (S405 to S415) configured to adjust the current phase according to a moving state of the moving object that is the state of the moving object.

### (Technical idea 3)

The propulsion device according to technical idea 1 or 2, further including: a motor driving unit (80, 801, 802) configured to drive the motor, in which the phase adjustment unit includes a torque adjustment unit (S104, S107, S109, S110, S112, S113) configured to adjust the current phase according to a required torque (T*) required by the motor driving unit for a motor torque (T) of the motor.

### (Technical idea 4)

The propulsion device according to technical idea 3, in which the torque adjustment unit includes a minimization adjustment unit (S104, S107) configured to adjust the current phase, such that the motor current is minimized in a range in which the motor torque becomes the required torque.

### (Technical idea 5)

The propulsion device according to technical idea 4, in which the minimization adjustment unit is configured to adjust the current phase, such that the current phase increases as the required torque increases.

### (Technical idea 6)

The propulsion device according to any one of technical ideas 3 to 5, in which the torque adjustment unit includes a minimization phase calculation unit (S104) configured to calculate a minimization phase (θim) of the current phase, at which the motor current is smallest in a range in which the motor torque becomes the required torque, and an allowance setting unit (S107) configured to set the minimization phase as a target phase (θi*) that is a target value of the current phase, when the minimization phase is included in a phase range (Ui) that is an allowable range of the current phase.

### (Technical idea 7)

The propulsion device according to technical idea 6, in which the torque adjustment unit includes an upper limit setting unit (S109, S110) configured to set, as the target phase, a limit phase (θin) that is a limit value of the phase range in the range in which the motor torque becomes the required torque, when the minimization phase is not included in the phase range.

### (Technical idea 8)

The propulsion device according to technical idea 7, in which the torque adjustment unit includes a torque reduction unit (S112, S113) configured to adjust the current phase, such that the motor torque is smaller than the required torque, when a limit amplitude (Ain) that is a current amplitude (Ai) corresponding to the limit phase is not included in an amplitude range (UAi) that is an allowable range of the current amplitude.

### (Technical idea 9)

The propulsion device according to any one of technical ideas 1 to 8, in which the phase adjustment unit includes a normal-time adjustment unit (S102, S104, S107, S109, S110, S112, S113) configured to adjust the current phase, such that the current phase becomes a normal-time phase, when a motor-related abnormality related to the motor does not occur, and an abnormal-time adjustment unit (S104, S107, S109, S110, S112, S113, S209, S212, S506) configured to adjust the current phase, such that the current phase becomes an abnormality-time phase, when the motor-related abnormality occurs.

### (Technical idea 10)

The propulsion device according to any one of technical ideas 1 to 9, in which the moving object is a flight vehicle (10) configured to fly by driving the motor, and the phase adjustment unit includes a flight adjustment unit (S405 to S415) configured to adjust the current phase according to a flight state of the flight vehicle.

### (Technical idea 11)

The propulsion device according to any one of technical ideas 1 to 10, in which the phase adjustment unit includes a specific adjustment unit (S408 to S415) configured to adjust the current phase according to at least one of a weight of the moving object, a moving history of the moving object, a state of charge of a power storage device (31) that is configured to supply electric power to the motor, and a temperature of the motor.

### (Technical idea 12)

The propulsion device according to any one of technical ideas 1 to 11, in which the moving object is a flight vehicle (10) configured to fly by driving the motor, and the phase adjustment unit includes at least one of a take-off adjustment unit (S408, S409) configured to adjust the current phase according to take-off of the flight vehicle, a landing adjustment unit (S410, S411) configured to adjust the current phase according to landing of the flight vehicle, and a horizontal-flight adjustment unit (S412, S413) configured to adjust the current phase according to horizontal flight of the flight vehicle.

### (Technical idea 13)

The propulsion device according to any one of technical ideas 1 to 12, in which the motor includes a stator (62) configured to cause the motor current to flow therethrough and a rotor (63) configured to rotate with respect to the stator, and the current phase is a phase of the motor current with respect to a magnetic pole of the rotor.

### (Technical idea 14)

A propulsion control device (81) is configured to control a propulsion device (15). The propulsion device includes a motor (61) configured to be driven to propel a moving object (10). The propulsion control device includes: a state acquisition unit (S101) configured to acquire a state of the moving object; and a phase adjustment unit (S102, S104, S107, S109, S110, S112, S113, S209, S212, S405 to S415, S506) configured to adjust, according to the state of the moving object acquired by the state acquisition unit, a current phase (θi) of a motor current (i) that flows through the motor.

### (Technical idea 15)

A propulsion control program is for controlling a propulsion device (15). The propulsion device includes a motor (61) configured to be driven to propel a moving object (10). The propulsion control program is configured to cause at least one processing unit (82) to: acquire a state of the moving object (S101); and adjust, according to the acquired state of the moving object, a current phase (θi) of a motor current (i) that flows through the motor (S102, S104, S107, S109, S110, S112, S113, S209, S212, S405 to S415, S506).

## Claims

1. A propulsion device (15) configured to propel a moving object (10), the propulsion device comprising:
a motor (61) configured to be driven to propel the moving object;
a state acquisition unit (S101) configured to acquire a state of the moving object; and
a phase adjustment unit (S102, S104, S107, S109, S110, S112, S113, S209, S212, S405 to S415, S506) configured to adjust, according to the state of the moving object acquired by the state acquisition unit, a current phase (θi) of a motor current (i) that flows through the motor.

2. The propulsion device according to claim 1, wherein
the phase adjustment unit includes at least one of
a control adjustment unit (S102, S104, S107, S109, S110, S112, S113) configured to adjust the current phase according to a control state of the motor that is the state of the moving object,
an abnormality adjustment unit (S104, S107, S109, S110, S112, S113, S209, S212, S506) configured to adjust the current phase according to an abnormal state that is the state of the moving object and includes presence or absence of an abnormality of the moving object, and
a moving adjustment unit (S405 to S415) configured to adjust the current phase according to a moving state of the moving object that is the state of the moving object.

3. The propulsion device according to claim 1 or 2, further comprising:
a motor driving unit (80, 801, 802) configured to drive the motor, wherein
the phase adjustment unit includes a torque adjustment unit (S104, S107, S109, S110, S112, S113) configured to adjust the current phase according to a required torque (T*) required by the motor driving unit for a motor torque (T) of the motor.

4. The propulsion device according to claim 3, wherein
the torque adjustment unit includes a minimization adjustment unit (S104, S107) configured to adjust the current phase, such that the motor current is minimized in a range in which the motor torque becomes the required torque.

5. The propulsion device according to claim 4, wherein
the minimization adjustment unit is configured to adjust the current phase, such that the current phase increases as the required torque increases.

6. The propulsion device according to claim 3, wherein
the torque adjustment unit includes
a minimization phase calculation unit (S104) configured to calculate a minimization phase (θim) of the current phase, at which the motor current is smallest in a range in which the motor torque becomes the required torque, and
an allowance setting unit (S107) configured to set the minimization phase as a target phase (θi*) that is a target value of the current phase, when the minimization phase is included in a phase range (Ui) that is an allowable range of the current phase.

7. The propulsion device according to claim 6, wherein
the torque adjustment unit includes an upper limit setting unit (S109, S110) configured to set, as the target phase, a limit phase (θin) that is a limit value of the phase range in the range in which the motor torque becomes the required torque, when the minimization phase is not included in the phase range.

8. The propulsion device according to claim 7, wherein
the torque adjustment unit includes a torque reduction unit (S112, S113) configured to adjust the current phase, such that the motor torque is smaller than the required torque, when a limit amplitude (Ain) that is a current amplitude (Ai) corresponding to the limit phase is not included in an amplitude range (UAi) that is an allowable range of the current amplitude.

9. The propulsion device according to claim 1 or 2, wherein
the phase adjustment unit includes
a normal-time adjustment unit (S102, S104, S107, S109, S110, S112, S113) configured to adjust the current phase, such that the current phase becomes a normal-time phase, when a motor-related abnormality related to the motor does not occur, and
an abnormal-time adjustment unit (S104, S107, S109, S110, S112, S113, S209, S212, S506) configured to adjust the current phase, such that the current phase becomes an abnormality-time phase, when the motor-related abnormality occurs.

10. The propulsion device according to claim 1 or 2, wherein
the moving object is a flight vehicle (10) configured to fly by driving the motor, and
the phase adjustment unit includes a flight adjustment unit (S405 to S415) configured to adjust the current phase according to a flight state of the flight vehicle.

11. The propulsion device according to claim 1 or 2, wherein
the phase adjustment unit includes a specific adjustment unit (S408 to S415) configured to adjust the current phase according to at least one of a weight of the moving object, a moving history of the moving object, a state of charge of a power storage device (31) that is configured to supply electric power to the motor, and a temperature of the motor.

12. The propulsion device according to claim 1 or 2, wherein
the moving object is a flight vehicle (10) configured to fly by driving the motor, and
the phase adjustment unit includes at least one of
a take-off adjustment unit (S408, S409) configured to adjust the current phase according to take-off of the flight vehicle,
a landing adjustment unit (S410, S411) configured to adjust the current phase according to landing of the flight vehicle, and
a horizontal-flight adjustment unit (S412, S413) configured to adjust the current phase according to horizontal flight of the flight vehicle.

13. The propulsion device according to claim 1 or 2, wherein
the motor includes a stator (62) configured to cause the motor current to flow therethrough and a rotor (63) configured to rotate with respect to the stator, and
the current phase is a phase of the motor current with respect to a magnetic pole of the rotor.

14. A propulsion control device (81) configured to control a propulsion device (15), the propulsion device including a motor (61) configured to be driven to propel a moving object (10), the propulsion control device comprising:
a state acquisition unit (S101) configured to acquire a state of the moving object; and
a phase adjustment unit (S102, S104, S107, S109, S110, S112, S113, S209, S212, S405 to S415, S506) configured to adjust, according to the state of the moving object acquired by the state acquisition unit, a current phase (θi) of a motor current (i) that flows through the motor.

15. A propulsion control program for controlling a propulsion device (15), the propulsion device including a motor (61) configured to be driven to propel a moving object (10), the propulsion control program configured to cause at least one processing unit (82) to:
acquire a state of the moving object (S101); and
adjust, according to the acquired state of the moving object, a current phase (θi) of a motor current (i) that flows through the motor (S102, S104, S107, S109, S110, S112, S113, S209, S212, S405 to S415, S506).
